Europäisches Patentamt

European Patent Office

Office européen des brevets

(19)

(11) **EP 1 038 236 B1**

(12) **FASCICULE DE BREVET EUROPEEN**

(45) Date de publication et mention
de la délivrance du brevet:
**13.03.2002 Bulletin 2002/11**

(21) Numéro de dépôt: **98958959.3**

(22) Date de dépôt: **07.12.1998**

(51) Int Cl.$^7$: **G06F 17/14**

(86) Numéro de dépôt international:
**PCT/FR98/02636**

(87) Numéro de publication internationale:
**WO 99/30251 (17.06.1999 Gazette 1999/24)**

(54) **PROCEDE DE CALCUL DE LA TRANSFORMEE DE FOURIER RAPIDE ET DE LA TRANSFORMEE DE FOURIER RAPIDE INVERSE**

VERFAHREN ZUR BERECHNUNG DER SCHNELLEN FOURIER-TRANSFORMATION UND DER SCHNELLEN INVERS-FOURIER-TRANSFORMATION

METHOD FOR COMPUTING FAST FOURIER TRANSFORM AND INVERSE FAST FOURIER TRANSFORM

(84) Etats contractants désignés:
**DE ES FI FR GB IT SE**

(30) Priorité: **08.12.1997 FR 9715737**

(43) Date de publication de la demande:
**27.09.2000 Bulletin 2000/39**

(73) Titulaires:
• **FRANCE TELECOM SA**
  **75015 Paris (FR)**
• **TELEDIFFUSION DE FRANCE - TDF (S.A.)**
  **75732 Paris 15 (FR)**

(72) Inventeurs:
• **JALALI, Ali**
  **F-35700 Rennes (FR)**
• **LERAY, Pierre**
  **F-35340 Liffre (FR)**
• **LACROIX, Dominique**
  **F-35000 Rennes (FR)**

(74) Mandataire: **Ballot, Paul et al**
**Cabinet Ballot,**
**4 Rue Général Hoche**
**56100 Lorient (FR)**

(56) Documents cités:
**US-A- 4 612 626** **US-A- 5 270 953**

• **S. C. CHAN ET AL: "Software Implementaion of 2D FFT on DSP 96002 Digital Signal Processor" SIGNAL PROCESSING VI - THEORIES AND APPLICATIONS - PROCEEDINGS OF EUSIPCO-92 - SIXTH EUROPEAN SIGNAL PROCESSING CONFERENCE, 24 - 27 août 1992, pages 1525-1528, XP000356534 BRUXELLES, BE**
• **S. L. JOHNSON: "Cooley-Tukey FFT on the Connection Machine" PARALLEL COMPUTING, vol. 18, no. 11, novembre 1992, pages 1201-1221, XP000330876 AMSTERDAM, NL**

**Description**

L'invention concerne un procédé de calcul de la transformée de Fourier rapide ou de la transformée de Fourier rapide inverse d'une suite de nombres réels ou d'une suite d'échantillons complexes conjugués.

La transformée de Fourier est sans doute l'un des outils les plus importants dans l'analyse, la conception et la mise en oeuvre des algorithmes relevant du traitement du signal, et l'existence d'algorithmes efficaces tels que celui de la transformée de Fourier rapide a largement contribué à cette situation. Quoique la plupart des algorithmes de transformée de Fourier soient conçus pour transformer des suites de nombres complexes, il existe cependant de nombreuses applications, telles que le traitement d'images ou de signaux acoustiques ou certains types de la modulation multiporteuse, dans lesquelles les suites à transformer sont des nombres réels.

De façon générale, la transformée de Fourier directe et la transformée de Fourier inverse établissent respectivement entre deux suites de N nombres complexes, x(n) et X(n), les relations suivantes :

$$X(n) = \sum_{k=0}^{N-1} x(k)w^{kn} \quad avec \quad n \in [0...N-1] \quad et \quad w^{kn} = e^{-j\frac{2\pi kn}{N}}$$

$$x(n) = \frac{1}{N}\sum_{k=0}^{N-1} X(k)w^{-kn} \quad avec \quad n \in [0...N-1]$$

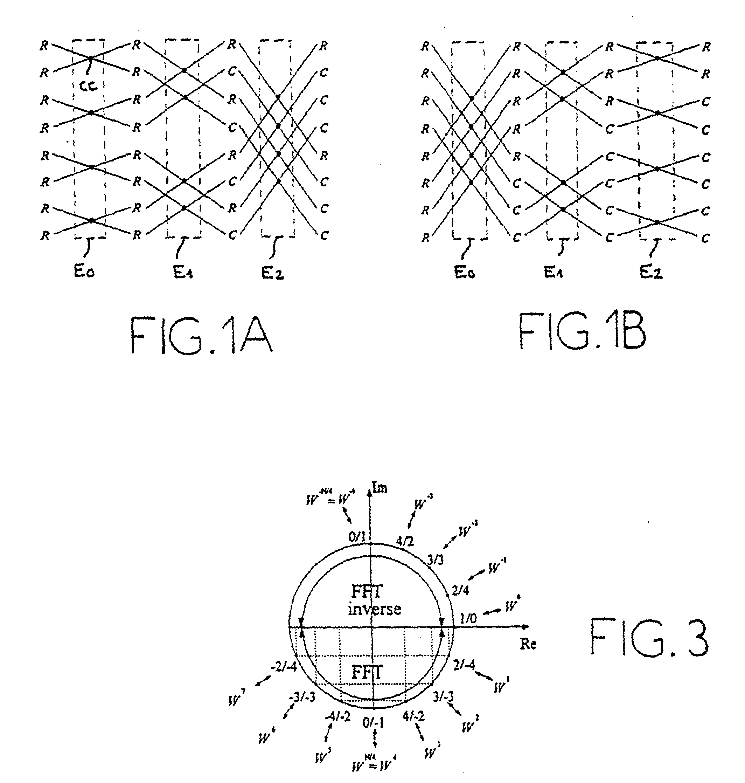

En 1965, J.W Cooley et J.W Tukey ont décrit un algorithme permettant de calculer rapidement la transformée de Fourier d'une suite de N nombres complexes dans un article intitulé "An Algorithm for the Machine Calculation of Complex Fourier Series", Math. Computation, Vol.19, 1965, pp.297-301. Cet algorithme est très intéressant lorsque N est une puissance de deux car il est alors particulièrement simple à mettre en oeuvre. Cet algorithme requiert μ étapes de calcul où μ=log₂(N). Il repose sur une décomposition de la suite à transformer en deux sous-suites entrelacées. Il existe deux types d'entrelacement : l'entrelacement temporel et l'entrelacement fréquentiel. Ces deux types d'entrelacement seront exposés plus en détail dans la suite de la description en référence aux figures 1A et 1B.

Des algorithmes particuliers ont été développés à partir de cet algorithme de base pour traiter le cas des suites de nombres réels. La transformation de Fourier d'une suite de 8 nombres réels selon un algorithme avec entrelacement temporel et selon un algorithme avec entrelacement fréquentiel est illustrée aux figures 1A et 1B. Pour chaque algorithme de transformée de Fourier avec entrelacement temporel, il existe un algorithme avec entrelacement fréquentiel qui correspond à une double inversion de la suite des opérations de transformation d'une part et, pour chaque circuit croisillon, des opérations de transformation en elles-mêmes d'autre part. Quel que soit l'entrelacement choisi, le procédé de transformation nécessite trois étapes de transformation E0, E1 et E2, lesquelles étapes sont mises en oeuvre par un jeu de quatre circuits croisillons CC, communément appelés "butterfly" en langage technique. Chaque circuit croisillon, représenté sur la figure par un point de croisement entre deux colonnes de nombres, effectue des opérations de calcul sur deux nombres, réels ou complexes. Les symboles R et C identifient respectivement un nombre réel et un nombre complexe. L'ordre des nombres réels et/ou complexes à l'issue des étapes de transformation est dépendant de l'entrelacement choisi.

L'algorithme avec entrelacement temporel est généralement choisi pour calculer la transformée de Fourier d'une suite de nombres réels en raison de la répartition symétrique des nombres réels et complexes à travers les étapes. En revanche, l'algorithme avec entrelacement fréquentiel est plus adapté pour la transformation directe ou inverse d'une suite nombres complexes conjugués.

Lorsque la suite à transformer x(n) est réelle, la transformée de Fourier vérifie la relation suivante:
x(n) est réelle si et seulement si

$$X(n) = X^*(-n) = X^*(N-n); \tag{1}$$

où * désigne l'opération de conjugaison.
Pour une suite x(n) de N nombres réels, on déduit de cette relation les résultats suivants:

- X(0) et X(N/2) sont réels;
- X(n) = X*(N-n) pour $1 \leq n \leq N/2 - 1$

La relation (1) met en évidence la présence d'informations redondantes dans la suite X(n).

Il convient de noter que le procédé de transformation est généralement mis en oeuvre par un unique jeu de circuits croisillons dont le mode opératoire est modifié au fur et à mesure de la transformation. A chaque changement de mode opératoire, les résultats sont stockés dans une mémoire comportant N emplacements mémoire, les échantillons de sortie d'un circuit croisillon se substituant dans la mémoire aux échantillons d'entrée de même rang correspondants. Cette méthode d'application de l'algorithme est couramment appelée méthode "in place". Cette méthode présente un avantage majeur : si les éléments de la suite x(n) sont traités à la première étape de transformation dans l'ordre binaire inverse de l'indice n ("bit-reversed"), les nombres de la suite X(n) sont délivrés à la dernière étape de transformation dans l'ordre croissant de l'indice n et vice versa.

L'article de S. C. CHAN ET AL: "Software Implementation of 2D FFT on DSP 96002 Digital Signal Processor" SIGNAL PROCESSING VI - THEORIES AND APPLICATIONS - PROCEEDINGS OF EUSIPCO-92 - SIXTH EUROPEAN SIGNAL PROCESSING CONFERENCE, 24 - 27 août 1992, pages 1525-1528, divulgue l'utilisation de l'inverse de l'ordre des échantillons de départ comme ordre de délivrance des échantillons de sortie dans le cas d'échantillons complexes, de même que de manière générale la méthode de transformation "in-place" et la substitution en mémoire des échantillons de sortie aux échantillons d'entrée de rangs correspondants

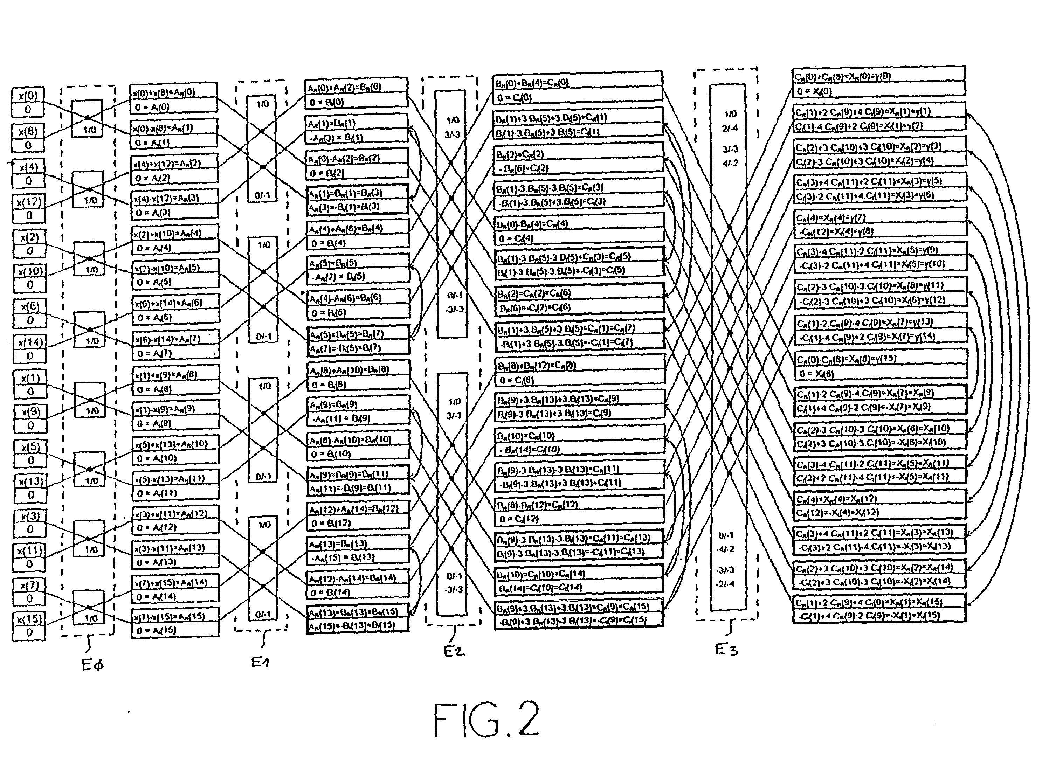

Un procédé de transformation connu est présenté à titre d'exemple à la figure 2. Ce procédé effectue la transformation de Fourier d'une suite réelle x(n) selon un algorithme complexe avec entrelacement temporel. Dans cet exemple, la suite x(n) à transformer comporte seize échantillons réels, x(0) à x(15). Le procédé de transformation comporte quatre étapes de transformation $E_p$ avec $0 \leq p \leq 3$. Les échantillons de la suite x(n) sont présentés à la première étape de transformation dans l'ordre binaire inverse de leur indice n ("bit-reversed").

A ce stade des explications, il convient de définir les termes employés dans la suite de la description. Le rang d'un échantillon s'entend de la position occupée par celui-ci dans la suite des échantillons à laquelle il appartient. L'indice d'un échantillon correspond alors au rang de départ de cet échantillon.

Les résultats intermédiaires obtenus aux différentes étapes de transformation sont représentés par les suites A(n), B(n) et C(n). Les échantillons des suites x(n), A(n), B(n), C(n) et X(n) sont stockés dans des doubles emplacements mémoire, un emplacement mémoire étant réservé pour la partie réelle de l'échantillon et l'autre emplacement étant réservé pour sa partie imaginaire. $A_R(n)$ et $A_I(n)$ désignent respectivement la partie réelle et la partie imaginaire de l'échantillon d'indice n de la suite A(n). Les circuits croisillons sont représentés sur la figure par des points de croisement entre des colonnes d'emplacements mémoire. A chaque circuit croisillon est affecté un coefficient $W^s$ symbolisé sur la figure 2 par un couple de coordonnées A/B où A et B désignent respectivement la partie réelle et la partie imaginaire du coefficient $W^s$. Les coordonnées 1/0 et 0/-1 sont attribuées respectivement aux coefficients $W^0=1$ et $W^{N/4}=W^4=-j$. Par souci de clarté et pour simplifier leur formulation, les autres coefficients $W^s$ ont été représentés par les couples suivants:

| | |
|---|---|
| $W^1 \rightarrow 2 / -4$ | $W^5 \rightarrow -4 / -2$ |
| $W^2 \rightarrow 3 / -3$ | $W^6 \rightarrow -3 / -3$ |
| $W^3 \rightarrow 4 / -2$ | $W^7 \rightarrow -2 / -4$ |

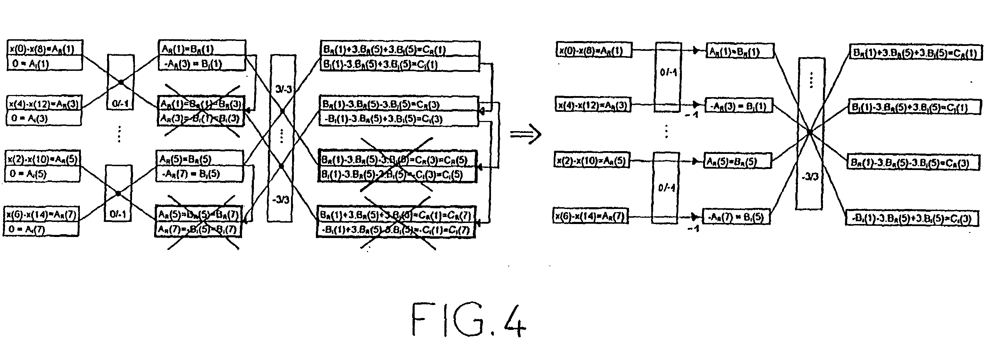

Ces couples de coordonnées sont représentés graphiquement à la figure 3. Les coordonnées A et B représentent en réalité respectivement une valeur de cosinus et une valeur de sinus. Ce coefficient $W^s$ intervient dans le calcul effectué par le circuit croisillon. Par ailleurs, les circuits croisillons sont répartis à chaque étape de transformation dans $N/2^{p+1}$ blocs de calcul, chaque bloc de calcul comportant $2^p$ circuits croisillons. Dans la suite de la description, le paramètre q désigne le rang des blocs de calcul dans une même étape de transformation; q est compris entre 0 et $(N/2^{p+1})-1$.

A la première étape de transformation $E_0$, les circuits croisillons sont répartis en huit blocs de calcul comprenant chacun un circuit croisillon effectuant une opération sur deux échantillons complexes ou réels. Si on désigne par e1 et e2 les échantillons appliqués sur les entrées d'un circuit croisillon, ce dernier délivre en sortie des échantillons s1 et S2 définis de la manière suivante :

$$s1 = e1 + W^s.e2$$

et

$$s2 = e1 -(W^s.e2)$$

où $W^s$ est le coefficient affecté audit croisillon.

Pour cette première étape de transformation, le coefficient $W^0=1$ est affecté aux huit circuits croisillons. Etant donné que les échantillons x(n) et le coefficient $W^0$ sont réels, les échantillons A(n) obtenus en fin d'étape $E_0$ sont réels.

Pour la seconde étape de transformation, $E_1$, les circuits croisillons sont répartis en quatre blocs de calcul comprenant chacun deux circuits croisillons. Le coefficient $W^0=1$ est affecté au premier de ces circuits croisillons; ainsi, le premier circuit croisillon de chaque bloc de calcul délivre deux échantillons réels. Le deuxième circuit croisillon des blocs de calcul est associé au coefficient $W^{N/4}=W^4=-j$ et génère deux échantillons complexes conjugués. Les échantillons de sortie obtenus en fin d'étape $E_1$ sont désignés par la suite B(n).

Pour la troisième étape de transformation, $E_2$, les circuits croisillons sont répartis dans deux blocs de calcul comprenant chacun quatre circuits croisillons associés respectivement aux coefficients $W^0$, $W^{2,}$ $W^4$ et $W^6$. Les échantillons de sortie à l'étape $E_2$ sont désignés par la suite C(n). Enfin, pour la quatrième étape de transformation, $E_3$, il est prévu un unique bloc de calcul comportant huit circuits croisillons associés respectivement aux coefficients $W^0$, $W^1$, $W^2$, $W^3$, $W^4$, $W^5$, $W^6$ et $W^7$. Cette étape de transformation génère la suite transformée X(n).

Etant donné la relation (1), la suite X(n) comporte d'une part des échantillons réels, X(0) et X(8), et d'autre part des échantillons complexes, X(1) à X(7) et X(9) à X(15), les échantillons X(15) à X(9) étant respectivement les conjugués des échantillons X(1) à X(7). La suite X(n) contient donc des informations redondantes. Les emplacements mémoire dessinés en trait épais sur la figure 2 désignent les emplacements mémoire renfermant les valeurs conjuguées des échantillons complexes contenus dans les emplacements mémoire qui leur sont associés par une flèche. Les suites de résultats intermédiaires B(n) et C(n) contiennent également des informations redondantes.

Il est alors possible de supprimer ces informations redondantes afin de réduire de moitié la taille de la mémoire de stockage des échantillons ainsi que le nombre des circuits croisillons.

Cependant, une suppression des informations redondantes stockées dans les emplacements mémoire dessinés en trait gras sur la figure 2 implique de réorganiser totalement les étapes de transformation de la figure 2. Cette réorganisation de la transformation a pour effet de modifier l'ordre de sortie des échantillons X(n).

Le problème est donc de réduire la taille de la mémoire de stockage et le nombre des circuits croisillons tout en conservant l'ordre de sortie des échantillons X(n). L'invention a pour but de proposer un procédé de calcul de la transformée de Fourier rapide ou de transformée de Fourier rapide inverse d'une suite de N échantillons réels x(n), avec N puissance de 2, fonctionnant selon un algorithme avec entrelacement temporel, qui délivre la suite des échantillons X(n) dans l'ordre croissant de l'indice n et utilise des moyens de calcul et de stockage réduits.

Dans ce but, l'invention a pour objet un procédé de calcul de la transformée de Fourier rapide ou de la transformée de Fourier rapide inverse d'un signal numérique défini par une suite de N échantillons réels de départ x(n), avec N puissance de deux et n $\in$ [0..N-1], comportant des étapes successives de transformation pour transformer des échantillons d'entrée en échantillons de sortie, l'ensemble des étapes de transformation étant effectué au moyen d'un unique jeu de circuits croisillons à plusieurs entrées et plusieurs sorties dont le mode opératoire est changé sélectivement à chaque étape de transformation, les échantillons d'entrée et de sortie de chaque étape de transformation étant stockés dans une mémoire de stockage, une suite de N échantillons de sortie y(n) représentatifs de la transformée de Fourier rapide ou rapide inverse des échantillons de départ x(n) étant délivrée à la dernière étape de transformation,

caractérisé en ce que les échantillons de sortie y(n) sont réels,

et en ce que les échantillons de sortie d'un circuit croisillon se substituent dans la mémoire de stockage aux échantillons d'entrée de même rang correspondants, de telle sorte que, si les échantillons de départ x(n) traités à la première étape de transformation sont classés dans l'ordre binaire inverse de leur indice n, les échantillons de sortie y(n) sont délivrés à la dernière étape de transformation dans l'ordre croissant de l'indice n, lesquels échantillons de sortie sont définis par les relations suivantes:

$$y(0) = Re[X(0)]$$

$$y(n) = Re[X((n+1)/2)]$$

pour n impair et différent de N-1

$$y(n) = Im[X(n/2)]$$

pour n pair et différent de 0

$$y(N-1) = Re[X(N/2)]$$

où les échantillons X(n), avec n ∈ [0..N-1], désignent les échantillons complexes de la suite correspondant à la transformée de Fourier rapide ou rapide inverse de la suite des échantillons de départ x(n).

Pour les procédés fonctionnant selon un algorithme avec entrelacement fréquentiel, l'invention concerne également un procédé de calcul de la transformée de Fourier rapide ou de la transformée de Fourier rapide inverse d'un signal numérique défini par une suite de N échantillons complexes X(n) conjugués deux à deux représentés par une suite de N échantillons réels de départ y(n), avec N puissance de deux et n ∈ [0..N-1], les échantillons de départ y(n) étant définis de la manière suivante :

$$y(0) = Re[X(0)]$$

$$y(n) = Re[X((n+1)/2)]$$

pour n impair et différent de N-1

$$y(n) = Im[X(n/2)]$$

pour n pair et différent de 0

$$y(N-1) = Re[X(N/2)]$$

lequel procédé de calcul comporte des étapes successives de transformation pour transformer des échantillons d'entrée en échantillons de sortie, une suite de N échantillons de sortie x(n) représentatifs de cette transformée de Fourier rapide ou rapide inverse étant délivrée à la dernière étape de transformation, l'ensemble des étapes de transformation étant effectué au moyen d'un unique jeu de circuits croisillons à plusieurs entrées et plusieurs sorties dont le mode opératoire est changé sélectivement à chaque étape de transformation, les échantillons d'entrée et de sortie de chaque étape de transformation étant stockés dans une mémoire de stockage,

caractérisé en ce que les échantillons de sortie x(n) sont réels,

et en ce que les échantillons de sortie d'un circuit croisillon se substituent dans la mémoire de stockage aux échantillons d'entrée de même rang correspondants, de telle sorte que, si les échantillons de départ y(n) traités à la première étape de transformation sont classés dans l'ordre croissant de l'indice n, les échantillons de sortie x(n) sont délivrés à la dernière étape de transformation dans l'ordre binaire inverse de l'indice n.

Les procédés de calcul de l'invention exécutent des opérations sur des échantillons réels et utilisent en conséquence des moyens de calcul et de stockage réduits par rapport au procédé présenté à la figure 2.

Selon une autre caractéristique de l'invention, les circuits croisillons transforment, à chaque étape de transformation, des couples d'échantillons d'entrée, les rangs des échantillons d'entrée d'un même couple dans la suite des échantillons d'entrée de ladite étape de transformation étant symétriques par rapport à un milieu entre les valeurs de rang extrêmes des échantillons d'entrée transformés par ledit circuit croisillon. Les échantillons d'entrée traités par un même circuit croisillon sont ainsi reliés deux à deux par une symétrie. Il en résulte une gestion simplifiée de l'adressage des échantillons.

Selon un autre aspect de l'invention, le procédé comporte de préférence $\mu-1$ étapes de transformation $E_p$ avec $\mu=\log_2(N)$ et $p \in [0..\mu-2]$.

D'autres caractéristiques et avantages de l'invention apparaîtront à la lecture de la description détaillée qui suit et qui est faite en référence aux dessins annexés dans lesquels :

- les figures 1A et 1B, déjà décrites, représentent respectivement une transformation de fourier de huit nombres réels selon un algorithme avec entrelacement temporel et selon un algorithme avec entrelacement fréquentiel;
- la figure 2, déjà décrite, illustre la transformation d'une suite de 16 nombres réels en une suite de 16 nombres complexes selon un algorithme complexe avec entrelacement temporel;
- la figure 3, déjà décrite, représente graphiquement la correspondance entre les coefficients $W^s$ et des couples de coordonnées A/B;
- la figure 4 représente des modifications appliquées sur une partie de la transformation de la figure 2;
- la figure 5 illustre une transformation modifiée traitant uniquement des nombres réels;
- la figure 6 est une représentation du procédé de calcul de la transformée de Fourier rapide selon l'invention;
- les figures 7A et 7B illustrent respectivement des permutations effectuées sur les circuits croisillons de bord et sur les circuits croisillons internes de rang impair de la transformation de la figure 5;
- la figure 8 représente un mode de réalisation du procédé de transformation selon l'invention, comportant μ étapes de transformation;
- la figure 9 illustre un regroupement de circuits croisillons de bord selon un premier mode de réalisation d'un procédé de transformation comprenant μ-1 étapes de transformation;
- la figure 10 représente un premier mode de réalisation d'un procédé de transformation comprenant μ-1 étapes de transformation;
- la figure 11 représente un modèle de circuit croisillon se rapportant au procédé de transformation illustré figure 10;
- la figure 12 représente une variante du mode de réalisation de la figure 10;
- la figure 13 représente un modèle de circuit croisillon se rapportant au mode de réalisation de la figure 12;
- la figure 14 illustre un regroupement de circuits croisillons de bord selon un deuxième mode de réalisation d'un procédé de transformation comprenant μ-1 étapes de transformation;
- la figure 15 représente un deuxième mode de réalisation d'un procédé de transformation comprenant μ-1 étapes de transformation avec μ pair;
- la figure 16 représente une variante du mode de réalisation précédent avec μ impair;
- la figure 17 représente un modèle de circuit croisillon se rapportant aux modes de réalisation présentés aux figures 15 et 16;
- la figure 18 représente un troisième mode de réalisation d'un procédé de transformation comprenant μ-1 étapes de transformation;
- la figure 19 représente un modèle de circuit croisillon se rapportant au mode de réalisation de la figure 18;
- la figure 20 représente les adresses qui sont associées aux différents circuits croisillons mis en oeuvre dans le mode de réalisation présenté à la figure 12;
- la figure 21 représente les adresses qui sont associées à une partie des échantillons d'un procédé de transformation traitant une suite de 32 échantillons réels;
- la figure 22 représente un exemple de mode de réalisation d'un procédé de transformation fonctionnant selon un algorithme avec entrelacement fréquentiel;
- la figure 23 représente un modèle de circuit croisillon se rapportant au mode de réalisation de la figure 22;
- la figure 24 représente les adresses qui sont associées aux différents circuits croisillons du mode de réalisation illustré à la figure 22.

Selon l'invention, on ne calcule qu'une partie des échantillons X(n), l'autre partie des échantillons étant redondante. On pourrait par exemple se limiter au calcul des nombres X(n) pour $0 \leq n \leq N/2$. Cependant, une solution plus adaptée consiste à calculer les nombres X(n) pour $0 \leq n \leq N/4$ et $N/2 \leq n \leq 3N/4$. Cette dernière solution est préférable car elle ne fait intervenir que les (N/4)+1 premiers circuits croisillons pour le calcul des X(n), les (N/4)-1 derniers circuits croisillons pouvant alors être supprimés. Les emplacements mémoire ainsi libérés peuvent être utilisés pour mémoriser la partie réelle ou la partie imaginaire des nombres X(n) restants. La taille de la mémoire de stockage peut ainsi être divisée par deux si on limite la taille des emplacements mémoire au stockage d'un nombre réel au lieu d'un nombre complexe. La partie réelle du nombre complexe X(n) est stockée dans l'emplacement mémoire qui lui a été initialement affecté tandis que sa partie imaginaire est stockée dans l'emplacement mémoire affecté initialement au nombre X(N-n). La même opération peut être effectuée pour les suites de résultats intermédiaires B(n) et C(n). Le procédé de transformation de l'invention se limite à calculer N échantillons réels y(n) au lieu de N échantillons complexes. Les échantillons réels y(n) sont définis de la manière suivante:

$$y(0) = Re[X(0)]$$

$$y(n) = Re[X((n+1)/2)]$$

pour n impair et différent de N-1

$$y(n) = Im[X(n/2)]$$

pour n pair et différent de 0

$$y(N-1) = Re[X(N/2)].$$

La suppression des informations redondantes et la réorganisation des emplacements mémoire modifient fortement le schéma de la figure 2. La figure 4 illustre les réorganisations effectuées sur la partie se rapportant au calcul des échantillons A(1), A(3), A(5), A(7), B(1), B(3), B(5), B(7), C(1), C(3), C(5) et C(7). Les échantillons redondants à supprimer sont B(3), B(7), C(5) et C(7). Après réduction de la taille des emplacements mémoire et réarrangement des échantillons restants dans ces emplacements mémoire, les circuits croisillons effectuent des calculs sur des nombres réels. Les circuits croisillons auxquels est affecté le couple 0/-1 effectuent des calculs sur deux nombres réels. En pratique, ils recopient sur leur première sortie le nombre présent sur leur première entrée et multiplient par -1 le nombre présent sur leur seconde entrée et le délivrent sur leur seconde sortie. Les circuits croisillons auxquels est affecté le couple 1/0 effectuent une addition et une soustraction sur deux nombres réels. Enfin, les autres circuits croisillons effectuent des opérations sur quatre nombres réels.

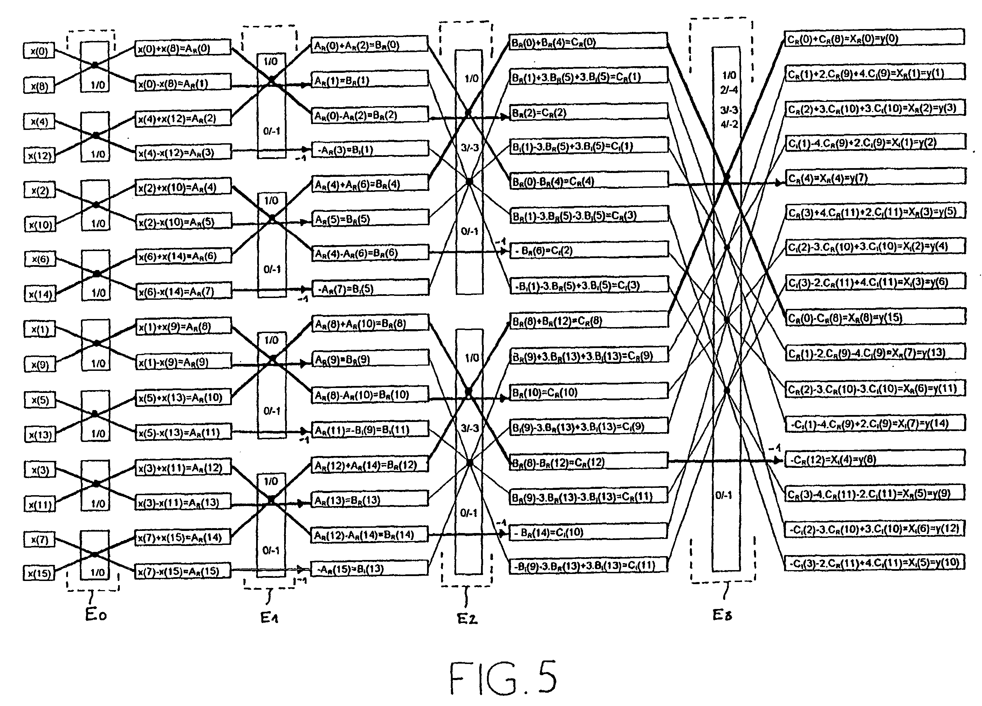

La transformation ainsi réarrangée est illustrée à la figure 5. Sur cette figure, les circuits croisillons associés aux couples 1/0 et 0/-1 correspondant aux coefficients $W^0$ et $W^4$ sont connectés aux emplacements mémoire par des traits épais. Cette figure montre que la réorganisation des étapes du procédé de transformation modifient l'ordre de sortie des échantillons y(n) et donc l'ordre de sortie de la suite X(n). Par ailleurs, ce procédé de transformation ne présente plus de symétrie particulière permettant de relier deux à deux les échantillons traités par un même circuit croisillon. Il en résulte une gestion très compliquée de l'adressage des échantillons à appliquer sur les entrées des circuits croisillons.

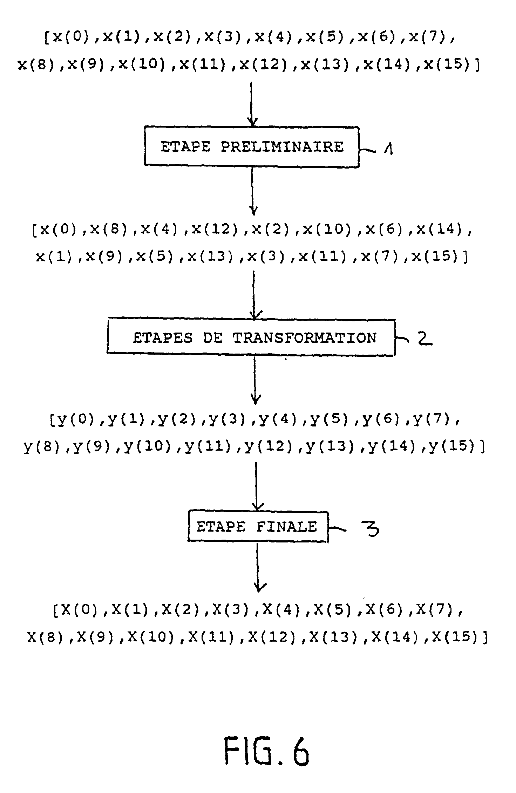

La figure 6 présente les étapes d'un procédé de calcul de la transformée de Fourier rapide ou de la transformée de Fourier rapide inverse d'une suite de N nombres réels x(n), avec N puissance de 2, fonctionnant selon un algorithme avec entrelacement temporel. Il comporte essentiellement des étapes de transformation 2 visant à transformer les N échantillons de départ x(n) classés dans l'ordre binaire inverse de leur indice n en échantillons de sortie y(n) réels représentatifs de cette transformée de Fourier classés dans l'ordre croissant de l'indice n.

Avantageusement, il comporte une étape préliminaire 1 pour ranger les N échantillons réels de départ x(n) à transformer dans l'ordre binaire inverse de leur indice n si les échantillons x(n) ne sont pas déjà dans cet ordre et une étape finale 3 pour générer les N échantillons complexes X(n) correspondant à la transformée de Fourier rapide des échantillons de départ x(n) à partir des N échantillons réels y(n) obtenus à l'issue des étapes de transformation.

Les procédés qui seront détaillés dans la suite de la description, seront plus particulièrement destinés à calculer la transformée de Fourier rapide d'une suite réelle. Aussi, les coefficients $W^s$ affectés aux circuits croisillons pour la mise en oeuvre du procédé de l'invention seront du type $e^{-j(2\pi s/N)}$ avec $s \geq 0$. Pour le calcul de la transformée de Fourier rapide inverse, le procédé de calcul est identique, cependant le coefficient est du type $e^{j(2\pi s/N)}$ avec $s \geq 0$.

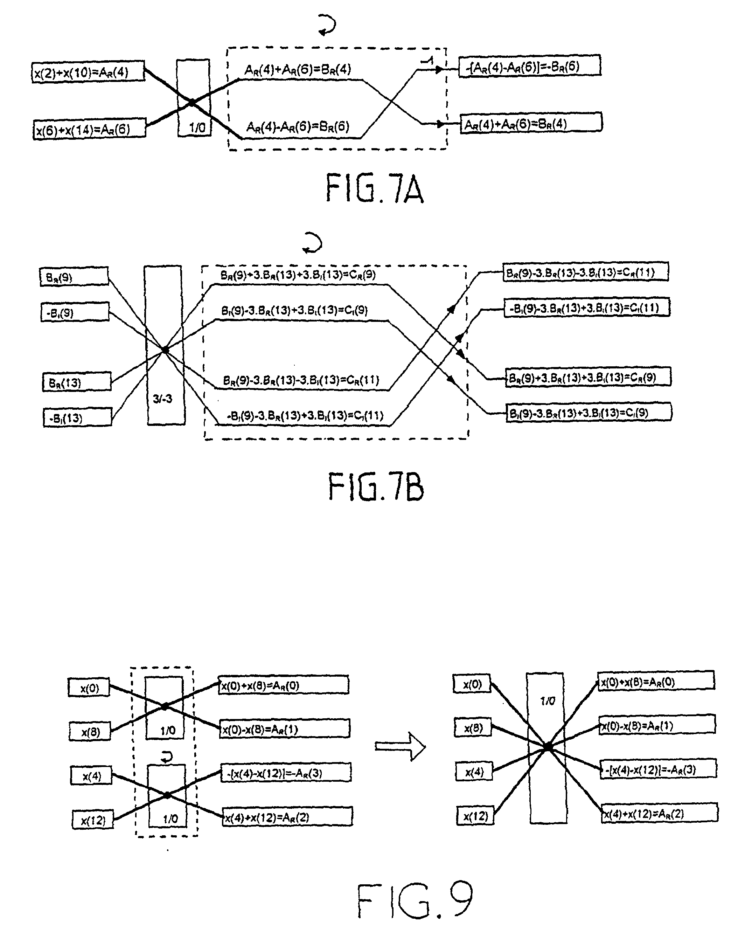

Pour obtenir simultanément des échantillons y(n) ordonnés dans l'ordre croissant de l'indice n et une symétrie de calcul, on propose selon l'invention de modifier les opérations de calcul effectuées par les circuits croisillons des blocs de calcul de rang q impair de la transformation illustré figure 5 conformément aux schémas des figures 7A et 7B.

S'agissant des circuits croisillons associés au coefficient 1/0 (figure 7A) des blocs de calcul de rang impair, on prévoit de permuter les deux sorties du circuit croisillon et de multiplier par -1 le résultat délivré sur la deuxième sortie du circuit croisillon.

S'agissant des circuits croisillons à quatre entrées (figure 7B), on prévoit de permuter les deux premières sorties avec les deux dernières.

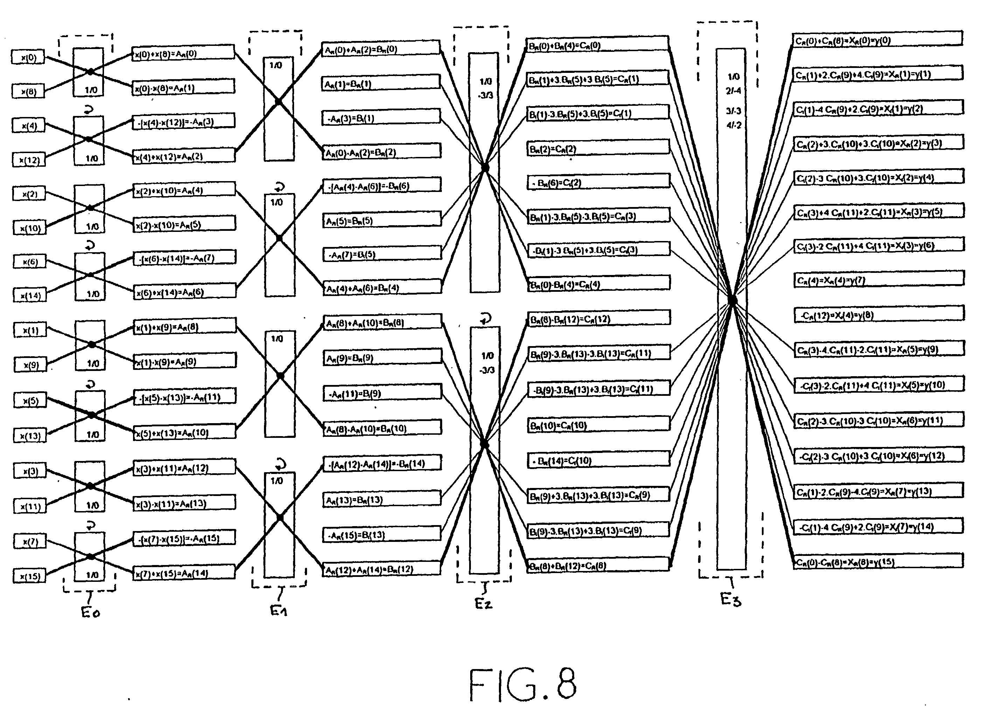

On applique cette méthode à l'ensemble de la transformation et on obtient alors un procédé de transformation délivrant en sortie des échantillons y(n) dans l'ordre croissant de l'indice n. Ce procédé est illustré à la figure 8. Le symbole ↻ placé au-dessus des blocs de calcul, désigne les blocs de calcul dans lesquels ont été modifiés les circuits croisillons, c'est-à-dire les blocs de calcul de rang impair. Etant donné la symétrie de calcul du procédé de transformation, les points de croisement représentant les circuits croisillons se superposent à l'intérieur de chaque bloc de calcul.

Les circuits croisillons auxquels est affecté le coefficient 1/0, sont appelés croisillons de bord car ils effectuent des calculs sur les échantillons disposés aux extrémités du bloc de calcul. Les autres circuits croisillons sont appelés circuits croisillons internes. Il convient de noter, qu'à chaque étape de transformation, on ne traite pas toujours la totalité des échantillons et que les échantillons non traités sont conservés dans leurs emplacements mémoire pour être traités à des étapes suivantes, ou bien produits en sortie s'ils sont déjà dans leur forme finale.

Le procédé de transformation ainsi modifié délivrent des échantillons y(n) dans l'ordre croissant de l'indice n et présente à chaque étape de transformation une symétrie de calcul facilitant l'adressage des échantillons à traiter.

Selon un autre aspect de l'invention, le procédé de calcul comporte avantageusement $\mu$-1 étapes de transformation. Plusieurs modes de réalisation dérivés de celui de la figure 8 et comprenant $\mu$-1 étapes de transformation sont donc présentés dans la suite de la description. Un modèle de circuit croisillon est associé à chacun de ces modes de réalisation.

Tous ces modes de réalisation ont en commun les caractéristiques suivantes :

- à chaque étape de transformation, il est prévu $N/2^{p+2}$ blocs de calcul et chaque bloc de calcul comporte un circuit croisillon de bord et/ou $2^p-1$ circuits croisillons internes; tous les circuits croisillons, qu'ils soient de bord ou internes, effectuent des opérations de calcul sur quatre échantillons réels;
- les rangs des échantillons traités par un même circuit croisillon sont définis de la manière suivante: si on considère, à l'étape de transformation $E_\beta$, un circuit croisillon de bord appartenant au bloc de calcul de rang $\alpha$, il transforme les échantillons d'entrée de rang $2^{\beta+2}\alpha$, $2^{\beta+2}\alpha+2^{\beta+1}-1$, $2^{\beta+2}\alpha+2^{\beta+1}$, $2^{\beta+2}\alpha+2^{\beta+2}-1$ en des échantillons de sortie de même rang et, si on considère un circuit croisillon interne de rang $\tau$ dans le bloc de calcul de rang $\alpha$ à l'étape $E_\beta$, il transforme les échantillons d'entrée de rang $2^{\beta+2}\alpha+2\tau+1$, $2^{\beta+2}\alpha+2\tau+2$, $2^{\beta+2}\alpha+2^{\beta+2}-2\tau-3$, $2^{\beta+2}\alpha+2^{\beta+2}-2\tau-2$ en des échantillons de sortie de même rang, avec $\beta\geq1$;
- le coefficient affecté au circuit croisillon interne de rang $\tau$ du bloc de calcul de rang $\alpha$ à l'étape $E_\beta$ est égal à $W^\delta$ avec $\delta = (\tau+1).(N/2^{\beta+2})$.

Dans tous ces modes de réalisation, les échantillons d'entrée de chaque circuit croisillon forment des couples d'échantillons, les rangs des échantillons d'un même couple dans la suite des échantillons d'entrée d'une étape de transformation étant symétriques par rapport à la valeur milieu des rangs extrêmes des échantillons d'entrée transformés par ledit circuit croisillon. Ce milieu correspond à la valeur $2^{\beta+2}\alpha+2^{\beta+1}-1/2$. Il suffit donc de connaître le rang de deux des quatres échantillons à appliquer sur les entrées du circuit croisillon pour en déduire le rang des deux autres. L'adressage de ces échantillons s'en trouve donc simplifié. Il sera détaillé plus loin dans la description.

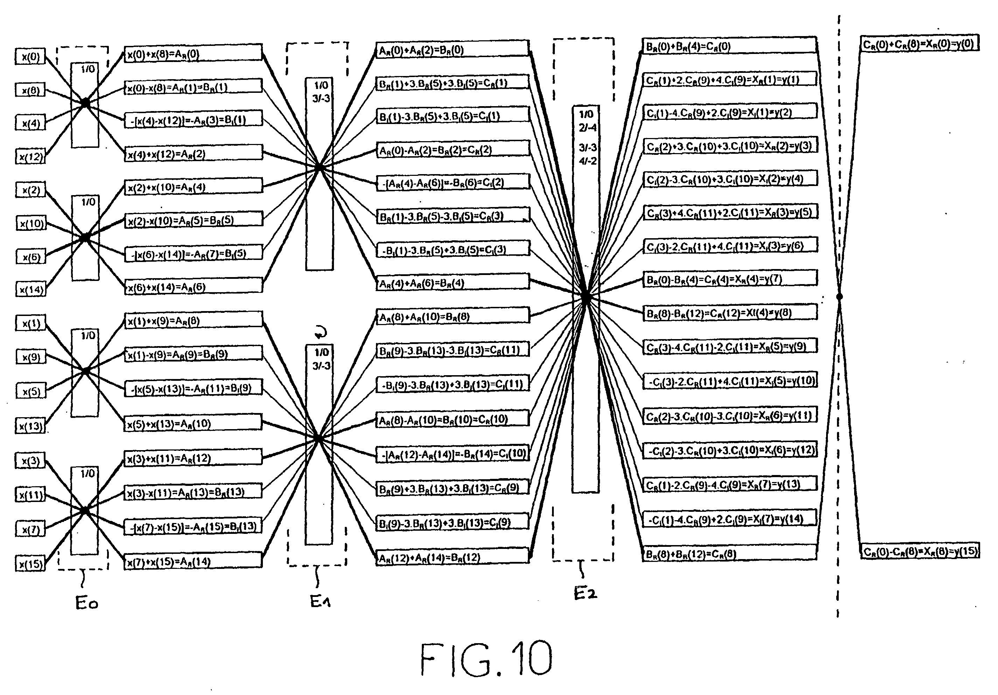

Ainsi, selon un premier mode de réalisation, les blocs de calcul voisins à chaque étape de transformation sont regroupés deux par deux. Les circuits croisillons de bord d'un même bloc de calcul sont alors fusionnés en un circuit croisillon de bord unique. Un exemple de fusion de deux circuits croisillons de bord est présenté à la figure 9. Cet exemple concerne les circuits croisillons de bord associés aux échantillons x(0), x(8), x(4) et x(12).

Par ailleurs, les étapes de transformation ne traitant pas à chaque fois la totalité des échantillons, certaines opérations de calcul peuvent être anticipées. Par exemple, le calcul des échantillons $C_R(1)$, $C_I(1)$, $C_R(3)$ et $C_I(3)$ peut être effectué à la deuxième étape de transformation. Il en résulte le schéma de la figure 10 présentant un premier mode de réalisation du circuit de transformation dans laquelle le procédé ne comporte que $\mu$-1 étapes de transformation. A l'étape de transformation $E_p$, chaque bloc de calcul comporte un circuit croisillon de bord et $2^p-1$ circuits croisillons internes. On peut considérer que ce procédé comporte uniquement 3 étapes de transformation, la quatrième étape se limitant à effectuer une addition et une soustraction. Cette addition et cette soustraction sont de préférence effectuées lors de l'étape finale, et cela afin de limiter le nombre des étapes de transformation.

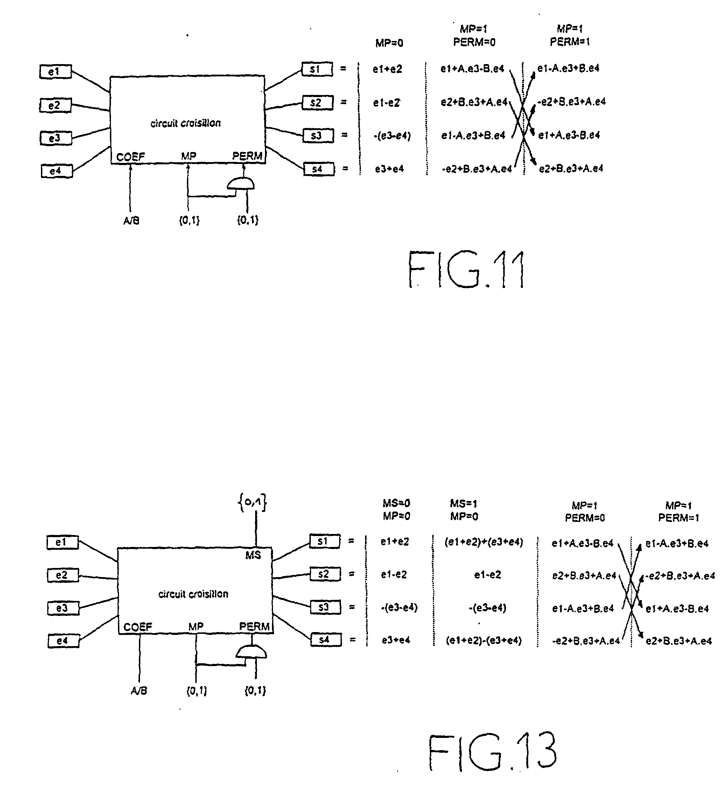

Un modèle de circuit croisillon associé au mode de réalisation de la figure 10 est représenté à la figure 11. Il comporte:

- quatre entrées pour recevoir des échantillons d'entrée e1, e2, e3, e4 et quatre sorties pour délivrer des échantillons de sortie s1, s2, s3, s4, et
- trois entrées supplémentaires respectivement de mode primaire MP, de permutation PERM et de coefficient COEF.

Ce circuit croisillon est chargé d'appliquer sélectivement sur les échantillons d'entrée e1, e2, e3 et e4, des opérations de transformation différentes déterminées chacune par les valeurs attribuées à des signaux de mode primaire, de permutation et au coefficient $W^s$ admis sur les entrées supplémentaires correspondantes.

Le signal de mode primaire vaut 0 s'il s'agit d'un circuit croisillon de bord et 1 s'il s'agit d'un circuit croisillon interne. Lorsque le signal de permutation est un 1, les échantillons de sortie s1 et s2 du circuit croisillon sont permutés avec les échantillons de sortie s3 et s4. Cette permutation n'est possible que lorsque le circuit croisillon est un circuit croisillon interne. Enfin, le coefficient $W^s$ associé au circuit croisillon est appliqué sur l'entrée de coefficient COEF.

Ainsi, si le coefficient complexe $W^s=A+j.B$ est appliqué sur l'entrée de coefficient du circuit croisillon, ce dernier délivre les échantillons de sortie si, s2, s3 et s4 suivants

(1) si le signal de mode primaire est à 0:

$$s1 = e1 + e2$$

$$s2 = e1 - e2$$

$$s3 = e4 - e3$$

$$s4 = e3 + e4$$

(2) si le signal de mode primaire est à 1 et le signal de permutation à 0:

$$s1 = e1 + A.e3 - B.e4$$

$$s2 = e2 + B.e3 + A.e4$$

$$s3 = e1 - A.e3 + B.e4$$

$$s4 = -e2 + B.e3 + A.e4$$

(3) si le signal de mode primaire est à 1 et le signal de permutation à 1:

$$s1 = e1 - A.e3 + B.e4$$

$$s2 = -e2 + B.e3 + A.e4$$

$$s3 = e1 + A.e3 - B.e4$$

$$s4 = e2 + B.e3 + A.e4$$

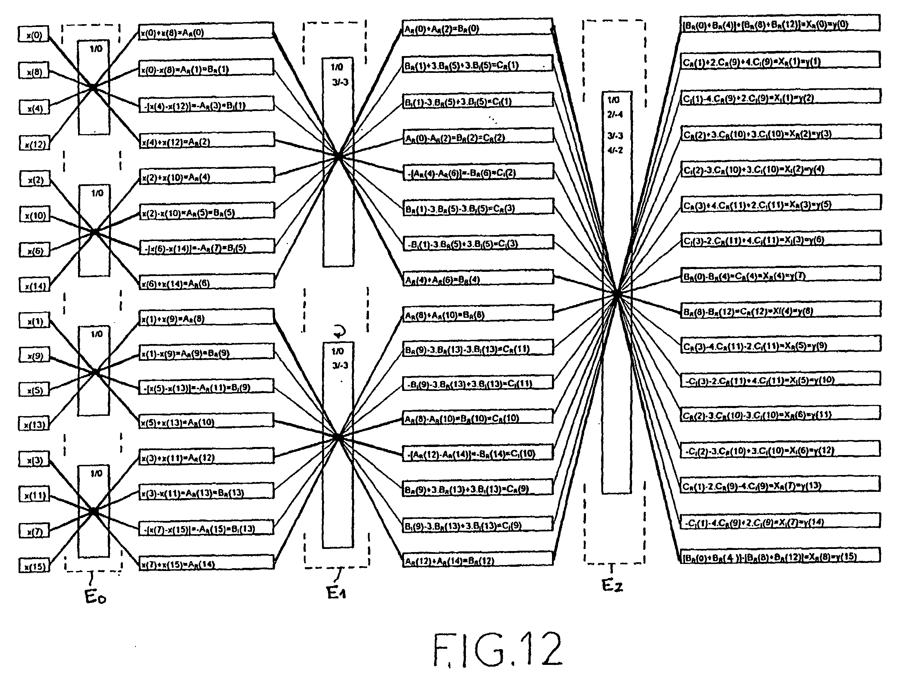

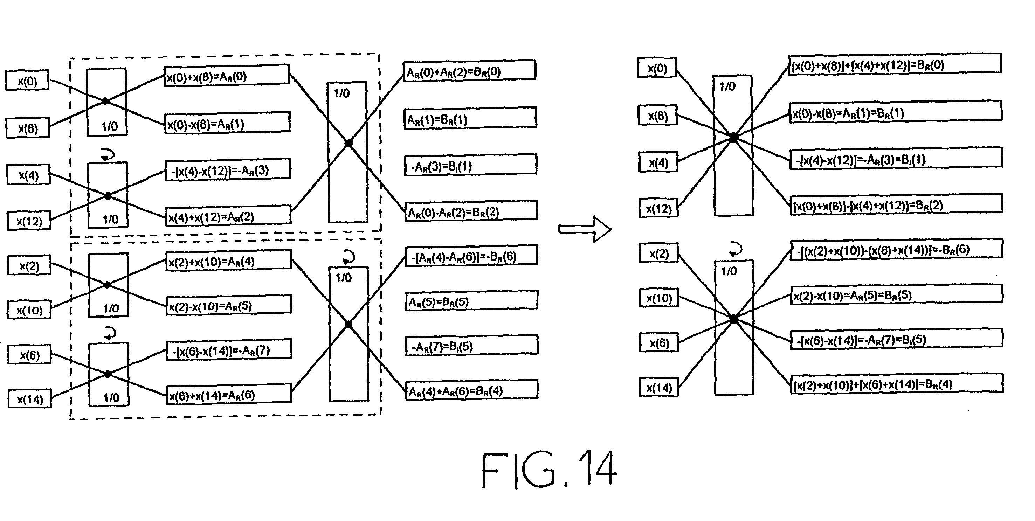

Selon un mode de réalisation en variante, on peut prévoir d'effectuer l'addition et la soustraction dans le circuit croisillon de bord de la dernière étape de transformation. Cet mode dé réalisation est présenté à la figure 12. A cet effet, le modèle de circuit croisillon correspondant comporte une quatrième entrée supplémentaire appelée entrée de mode secondaire MS sur laquelle est appliqué un signal de mode secondaire. Ce signal est à 1 quand il s'agit du circuit croisillon de bord de la dernière étape de transformation, sinon il est à 0. Ce modèle est illustré figure 13. Ce modèle possède un mode de fonctionnement supplémentaire par rapport au modèle précédent; ainsi lorsque le signal de mode primaire est à 0 et que le signal de mode secondaire est à 1, on obtient en sortie:

$$s1 = e1 + e2 + e3 + e4$$

$$s2 = e1 - e2$$

$$s3 = e4 - e3$$

$$s4 = (e1 + e2) - (e3 + e4)$$

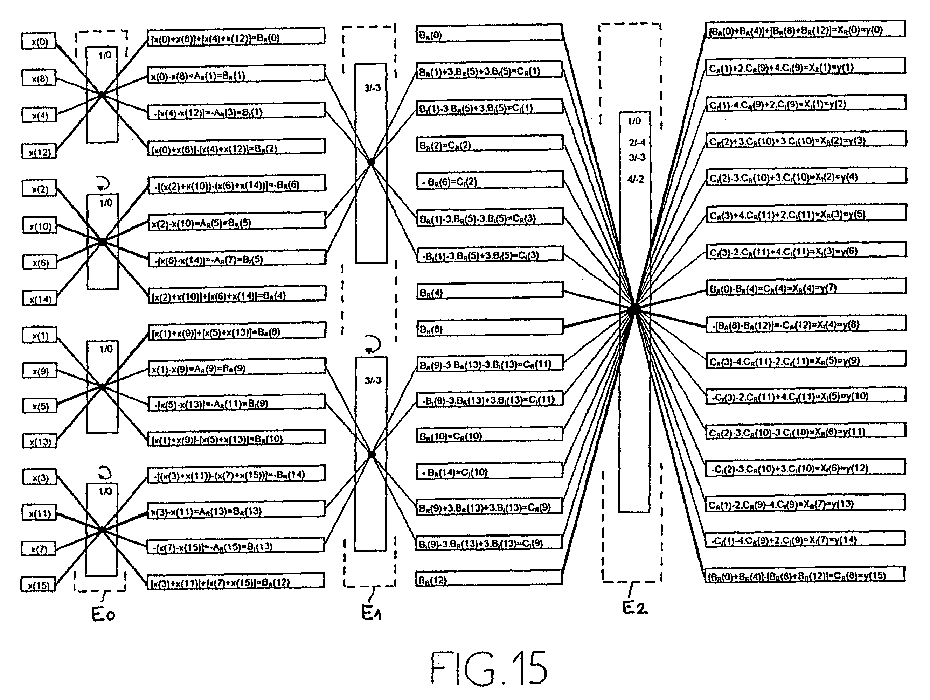

Selon un deuxième mode de réalisation dérivé du schéma de la figure 8, les circuits croisillons de bord voisins aux étapes de transformation $E_p$ d'indice p pair sont regroupés deux par deux et sont fusionnés avec le circuit croisillon de bord de l'étape suivante d'indice impair pour former un nouveau circuit croisillon de bord au niveau de l'étape d'indice impair. Ce regroupement est illustré à la figure 14 au travers d'un exemple. Dans cet exemple, les circuits croisillons de bord de la première étape de transformation traitant les échantillons x(0), x(8), x(4) et x(12) sont fusionnés avec le circuit croisillon de bord de la deuxième étape traitant les échantillons $A_R(0)$ et $A_R(2)$. De même, les circuits croisillons de bord de la première étape de transformation traitant les échantillons x(2), x(10), x(6) et x(14) sont fusionnés avec le circuit croisillon de bord de la deuxième étape traitant les échantillons $A_R(4)$ et $A_R(6)$. Les deux circuits croisillons obtenus se différencient en ce que le deuxième effectue en plus une permutation entre la première et la dernière sortie. Si on applique ce regroupement à l'ensemble de la transformation illustrée figure 8, il en résulte que l'étape $E_0$ n'utilise plus de circuits croisillons et peut être supprimée. Le procédé de transformation résultant est illustré à la figure 15.

Il convient cependant de distinguer deux cas pour ce procédé de transformation : le cas où N est une puissance paire de deux (µ pair) et le cas où N est une puissance impaire de deux (µ impair).

Dans le cas où µ est pair, il y a un nombre pair d'étapes de transformation dans le mode de réalisation présenté à la figure 8 et le regroupement des circuits croisillons de bord des étapes d'indice pair avec ceux des étapes suivantes d'indice impair ne pose pas de problème. Ce cas correspond au schéma de la figure 15.

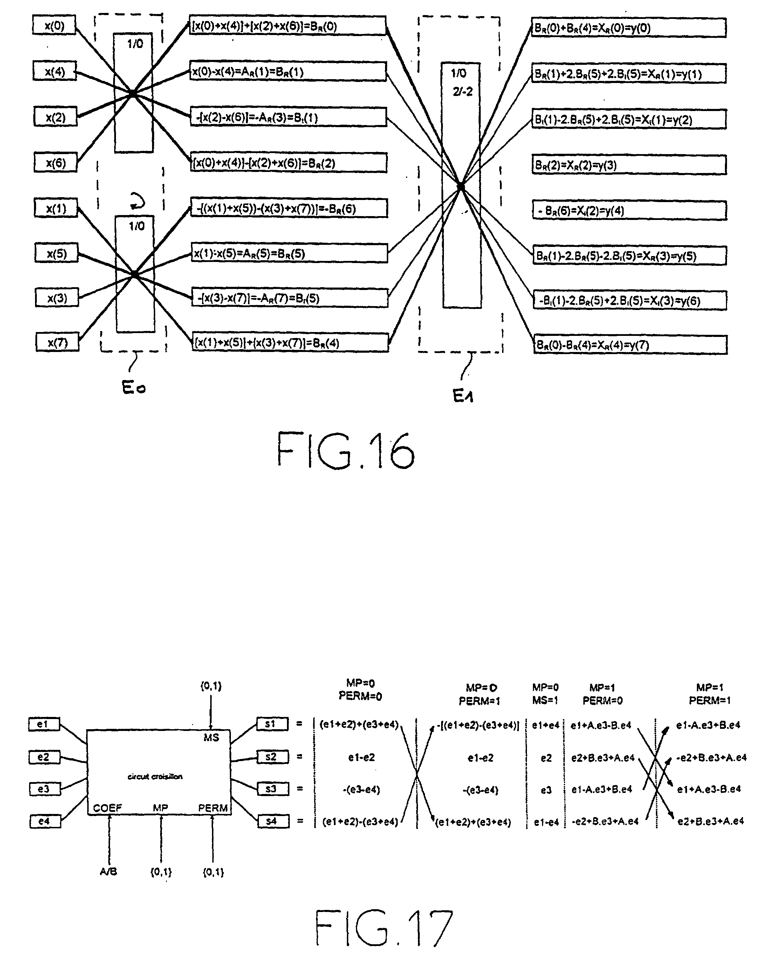

Dans le cas où µ est impair, le circuit croisillon de bord de la dernière étape d'indice pair ne peut être regroupé avec d'autres circuits croisillons de bord. Il convient alors de prévoir un mode de fonctionnement particulier pour ce cas. Ce cas est illustré figure 16, laquelle figure représente la transformation d'une suite de huit échantillons réels (µ=3). Le circuit croisillon de bord de la dernière étape de transformation de ce circuit n'a pu être fusionné avec d'autres circuits croisillons de bord.

Le modèle de circuit croisillon associé à ce deuxième mode de réalisation est illustré figure 17; il se différencie du modèle précédent en ce que le signal de mode secondaire est à 1 lorsqu'il s'agit d'un circuit croisillon de bord destiné à mettre en oeuvre la dernière étape et que µ est impair, et en ce que la permutation s'applique à l'ensemble des circuits croisillons des blocs de calcul de rang pair.

Les opérations de calcul réalisées par le circuit croisillon sont également différentes et sont définies de la manière suivante :

(1) si les signaux de mode primaire, de mode secondaire et de permutation sont à 0:

$$s1 = e1 + e2 + e3 + e4$$

$$s2 = e1 - e2$$

$$s3 = e4 - e3$$

$$s4 = (e1 + e2)-(e3 + e4)$$

(2) si le signal de mode primaire est à 0 et le signal de mode secondaire est à 1:

$$s1 = e1 + e4$$

$$s2 = e2$$

$$s3 = e3$$

$$s4 = e1 - e4$$

(3) si le signal de mode primaire est à 0 et le signal de permutation à 1:

$$s1 = (e3 + e4)-(e1+e2)$$

$$s2 = e1 - e2$$

$$s3 = e4 - e3$$

$$s4 = e1 + e2 + e3 + e4$$

(4) si le signal de mode primaire est à 1 et le signal de permutation à 0:

$$s1 = e1 + A.e3 - B.e4$$

$$s2 = e2 + B.e3 + A.e4$$

$$s3 = e1 - A.e3 + B.e4$$

$$s4 = -e2 + B.e3 + A.e4$$

(5) si le signal de mode primaire est à 1 et le signal de permutation à 1:

$$s1 = e1 - A.e3 + B.e4$$

$$s2 = -e2 + B.e3 + A.e4$$

$$s3 = e1 + A.e3 - B.e4$$

$$s4 = e2 + B.e3 + A.e4$$

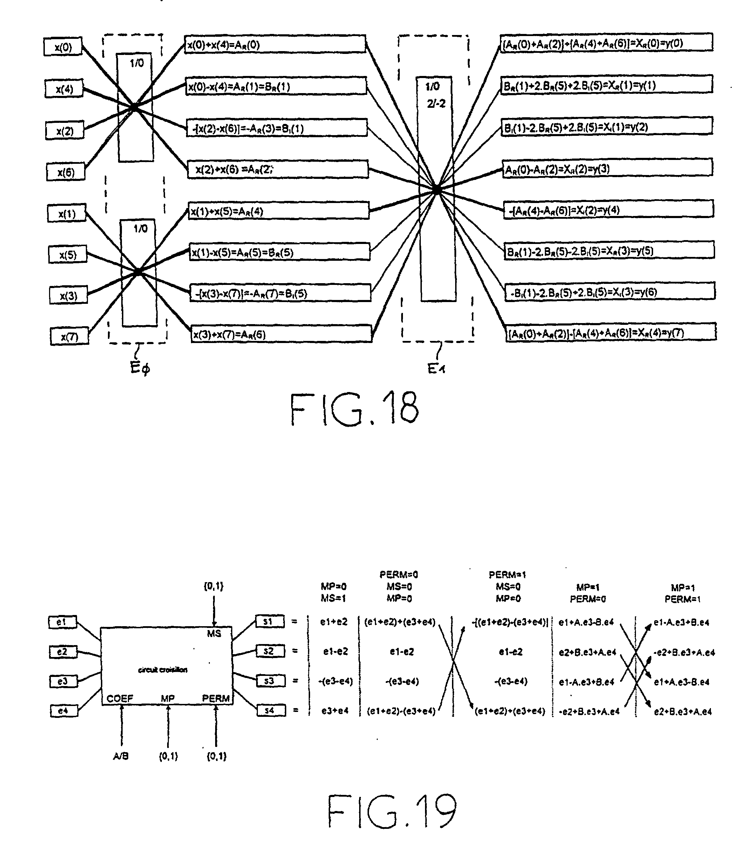

Pour le cas où $\mu$ est impair, on peut également prévoir d'une part, de regrouper les circuits croisillons de bord pour la mise en oeuvre de la première étape de transformation de la même façon que dans le premier mode de réalisation et d'autre part, de regrouper les circuits croisillons des autres étapes comme dans le troisième mode de réalisation. Le regroupement des circuits croisillons à partir de la seconde étape est alors effectué en attribuant un indice pair à la première étape de transformation. Ces regroupements sont représentés à la figure 18.

Le modèle de circuit croisillon correspondant à ce mode de réalisation est représenté à la figure 19. Le signal de mode secondaire vaut 1 s'il s'agit d'un circuit croisillon de bord mettant en oeuvre la première étape de transformation du circuit et si $\mu$ est pair. Les opérations de calcul effectuées par ce circuit croisillon sont les suivantes :

(1) si le signal de mode primaire est à 0 et le signal de mode secondaire est à 1:

$$s1 = e1 + e2$$

$$s2 = e1 - e2$$

$$s3 = e4 - e3$$

$$s4 = e3 + e4$$

(2) si les signaux de mode primaire, de mode secondaire et de permutation sont à 0:

$$s1 = e1 + e2 + e3 + e4$$

$$s2 = e1 - e2$$

$$s3 = e4 - e3$$

$$s4 = (e1 + e2)-(e3 + e4)$$

(3) si les signaux de mode primaire et de mode secondaire sont à 0 et le signal de permutation à 1:

$$s1 = (e3 + e4)-(e1 + e2)$$

$$s2 = e1 - e2$$

$$s3 = e4 - e3$$

$$s4 = e1 + e2 + e3 + e4$$

(4) si le signal de mode primaire est à 1 et le signal de permutation à 0:

$$s1 = e1 + A.e3 -B.e4$$

$$s2 = e2 + B.e3 + A.e4$$

$$s3 = e1 - A.e3 + B.e4$$

$$s4 = -e2 + B.e3 + A.e4$$

(5) si le signal de mode primaire est à 1 et le signal de permutation à 1:

$$s1 = e1 - A.e3 + B.e4$$

$$s2 = -e2 + B.e3 + A.e4$$

$$s3 = e1 + A.e3 -B.e4$$

$$s4 = e2 + B.e3 + A.e4$$

Dans tous les modes de réalisation décrits précédemment, les rangs des échantillons traités par un même circuit croisillon sont symétriques deux à deux par rapport à une valeur milieu. Il suffit donc de connaître le rang des deux premiers échantillons d'entrée du circuit croisillon pour en déduire les deux autres par symétrie. Si les échantillons d'entrée et de sortie sont sauvegardés dans des emplacements mémoire dont l'adresse correspond au rang de ces échantillons, l'adressage de ces derniers s'en trouve simplifié.

En effet, il suffit alors de générer deux adresses par circuit croisillon, les deux autres pouvant être déduites par symétrie. Par ailleurs, il convient de noter que les adresses des échantillons d'entrée et celles des échantillons de sortie correspondants sont les mêmes car la transformation est appliquée selon une méthode "in place".

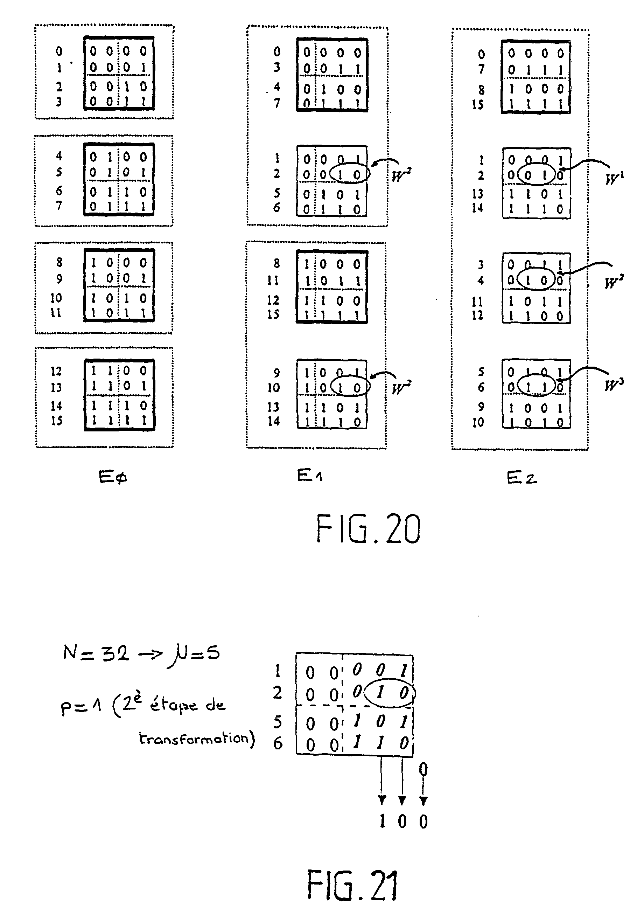

Les adresses associées aux différents circuits croisillons se rapportant au procédé de transformation de la figure 12 sont présentés à la figure 20. L'adresse d'un échantillon est prise égale au rang de cet échantillon dans la suite des échantillons à laquelle il appartient. La suite à transformer dans l'exemple de la figure 12 comporte 16 échantillons. Il est donc nécessaire de produire 16 adresses, l'adressage se faisant sur quatre bits. Pour une suite de N échantillons, l'adressage se fait sur $\log_2(N)$ bits.

Chaque étape de transformation du procédé de la figure 12 est mise en oeuvre par quatre circuits croisillons traitant chacun quatre échantillons réels d'entrée. Les adresses binaires des échantillons à traiter à chaque étape sont donc réparties en quatre groupes de quatre adresses. Les groupes d'adresses se rapportant à un circuit croisillon de bord sont contenus dans des rectangles en trait gras et les groupes d'adresses se rapportant à un circuit croisillon interne sont contenus dans des rectangles en trait fin. Par ailleurs, les groupes d'adresses se rapportant à un même bloc de calcul sont regroupés dans des rectangles en pointillés.

Le premier circuit croisillon de bord à l'étape $E_0$ traite les quatre premiers échantillons de la suite x(n) issue de l'étape préliminaire de classement. Les adresses correspondantes à générer pour ce circuit croisillon sont donc 0000, 0001, 0010 et 0011. De même si on considère le premier circuit croisillon de bord de l'étape $E_1$, il traite les échantillons de rang 0, 3, 4 et 7 de la suite A(n). Les adresses correspondantes à générer pour ce circuit croisillon sont donc 0000, 0011, 0100 et 0111.

Les ($\mu$-2-p) bits de poids fort des adresses indiquent le rang q du bloc de calcul auquel se rapporte l'adresse. Ainsi, les deux bits de poids fort des adresses générées pour le premier bloc de calcul de l'étape $E_0$ sont 00. Il faut noter également que, étant donné que la dernière étape n'utilise qu'un seul bloc de calcul, les adresses générées pour ce bloc de calcul ne comporte pas de bit se rapportant au rang de ce bloc ($\mu$-p-2=0).

Pour chaque circuit croisillon, on prévoir de générer uniquement deux adresses binaires; les deux autres sont obtenus en inversant les (p+2) bits de poids faible des adresses générées. Si on considère par exemple les adresses du premier circuit croisillon de bord à l'étape $E_1$, on ne génère que les adresses 0000 et 0011 et on obtient les adresses 0111 et 0100 en inversant les 3 bits de poids faible des adresses générées.

Une première et une seconde adresse par circuit croisillon sont alors produites, lesquelles adresses sont consécutives lorsqu'il s'agit d'un circuit croisillon interne. Lorsqu'il s'agit d'un circuit croisillon de bord, les p+2 bits de poids faible de la première adresse sont égaux à 0, et les p+2 bits de poids faible de la seconde adresse forment un nombre égal à $2^{p+1}-1$.

En ce qui concerne les coefficients $W^s$ à appliquer sur les entrées de coefficient COEF des circuits croisillons internes, ils sont stockés dans une mémoire du circuit de calcul. Seules N/4 valeurs de coefficients sont nécessaires au calcul de la transformée de Fourier. L'adressage de ces coefficients s'effectue sur $\mu$-2 bits. Dans les modes de réalisation décrits précédemment où N=16, on utilise uniquement les couples 1/0, 2/-4, 3/-3 et 4/-2 correspondant aux coefficients $W^0$, $W^1$, $W^2$, $W^3$.

Selon l'invention, il est donc nécessaire de connaître l'adresse de ces quatre coefficients. L'adresse associée à chaque coefficient $W^s$ est choisie égale à la valeur de la puissance s. Par conséquent, les adresses des coefficients $W^0$, $W^1$, $W^2$, $W^3$ sont respectivement 00, 01, 10, 11.

Afin de ne pas avoir à générer ces adresses, on utilise selon l'invention les adresses produites pour adresser les échantillons. L'adresse du coefficient qui est affecté à un circuit croisillon est comprise dans la seconde adresse produite correspondant à la plus élevée des deux adresses.

Cependant, il convient de distinguer trois cas:

(a) lorsque p+1=$\mu$-2, l'adresse du coefficient correspond au nombre formé par les p+1 bits de poids faible de la seconde adresse générée pour ce circuit croisillon interne. C'est le cas pour la deuxième étape (p=1) dans l'exemple de la figure 20. Les 2 bits de poids faible de la seconde adresse sont 10 et désignent donc le coefficient $W^2$.
(b) si p+1>$\mu$-2, l'adresse du coefficient correspond au nombre formé par les p+1 bits de poids faible de la seconde adresse générée pour ce circuit croisillon interne, ôté de ses $\mu$-p-1 bits de poids faible. C'est le cas pour la troisième étape (p=2) dans l'exemple de la figure 20. Les 3 bits de poids faible de la seconde adresse générée pour le premier circuit croisillon interne sont 010. Lorsqu'on ôte le dernier bit ($\mu$-p-1=1) de ce nombre, on obtient le nombre 01 se rapportant au coefficient $W^1$. Ce cas correspond toujours à la dernière étape d'un procédé de transformation comportant $\mu$-1 étapes de transformation.

**13**

(c) si p+1<μ-2, l'adresse du coefficient correspond au nombre formé par les p+1 bits de poids faible de la seconde adresse générée pour ce circuit croisillon interne, suivis de μ-p-3 bits à zéro en fin de nombre. Ce cas est illustré figure 21. Cette figure représente les adresses se rapportant à un circuit croisillon interne pour la mise en oeuvre de la deuxième étape de transformation (p=1) d'un procédé de transformation destiné à traiter une suite de 32 échantillons réels (N=32 et μ=5). Ce circuit croisillon transforme les échantillons de rang 1, 2, 5 et 6 de la suite des échantillons obtenue en fin de première étape. Les deux bits de poids faibles de la seconde adresse générée sont 10 et si on y rajoute un zéro (μ-p-3=1) en fin de nombre, on obtient le nombre 100 désignant le coefficient $W^4$.

Ainsi, les deux adresses produites par le générateur d'adresses pour un circuit croisillon servent à adresser à la fois les quatre échantillons à traiter et le coefficient se rapportant au circuit croisillon.

De préférence, les échantillons d'adresse paire et d'adresse impaire seront stockés dans deux mémoires distinctes. Ainsi, deux échantillons d'entrée pourront être lus simultanément et les échantillons de sortie résultants pourront être écrits simultanément, ce qui représente un gain au niveau du temps de traitement de la suite à transformer.

Comme mentionné précédemment, à chaque procédé de calcul fonctionnant selon un algorithme avec entrelacement temporel correspond un procédé fonctionnant selon un algorithme avec entrelacement fréquentiel. Pour l'obtenir, il suffit d'une part d'inverser la suite des opérations de transformation du procédé avec entrelacement temporel correspondant, et d'autre part, pour chaque circuit croisillon, d'inverser les opérations de transformation en elles-mêmes par rapport à celle du procédé correspondant.

Aussi, l'invention concerne également un procédé de calcul de la transformée de Fourier rapide ou de la transformée de Fourier rapide inverse d'une suite de N échantillons complexes X(n) conjugués deux à deux, avec N puissance de 2, fonctionnant selon un algorithme avec entrelacement fréquentiel. La suite des N échantillons complexes X(n) est représentée par une suite de N échantillons réels y(n) définie de la manière suivante:

$$y(0) = Re[X(0)]$$

$$y(n) = Re[X((n+1)/2)]$$

pour n impair et différent de N-1

$$y(n) = Im[X(n/2)]$$

pour n pair et différent de 0

$$y(N-1) = Re[X(N/2)]$$

Selon l'invention, ce procédé comporte essentiellement des étapes de transformation pour transformer des échantillons d'entrée en échantillons de sortie. Les échantillons réels y(n) sont traités à une première étape de transformation et la dernière étape délivre une suite de N échantillons de sortie x(n) représentatifs de la transformée de Fourier rapide ou rapide inverse de la suite des échantillons X(n). Comme pour les circuits avec entrelacement temporel, chaque étape de transformation est mise en oeuvre par un jeu de circuits croisillons à plusieurs entrées et à plusieurs sorties. La transformation étant effectuée selon une méthode "in place", l'ensemble des étapes est effectué au moyen d'un unique jeu de circuits croisillons dont le mode opératoire est modifié à chaque étape de transformation. Les échantillons d'entrée et de sortie sont mémorisés à chaque étape de transformation dans une mémoire de stockage. Après transformation, les échantillons de sortie d'un même circuit croisillon se substituent dans la mémoire de stockage aux échantillons d'entrée de même rang correspondants.

Selon l'invention, si les échantillons y(n) présentés à la première étape de transformation sont classés dans l'ordre croissant de l'indice n, les échantillons de sortie x(n) sont délivrés à la dernière étape de transformation dans l'ordre binaire inverse de l'indice n. L'ordre de sortie des échantillons x(n) peut ensuite être modifié par une étape finale de manière à les classer dans l'ordre croissant de l'indice n.

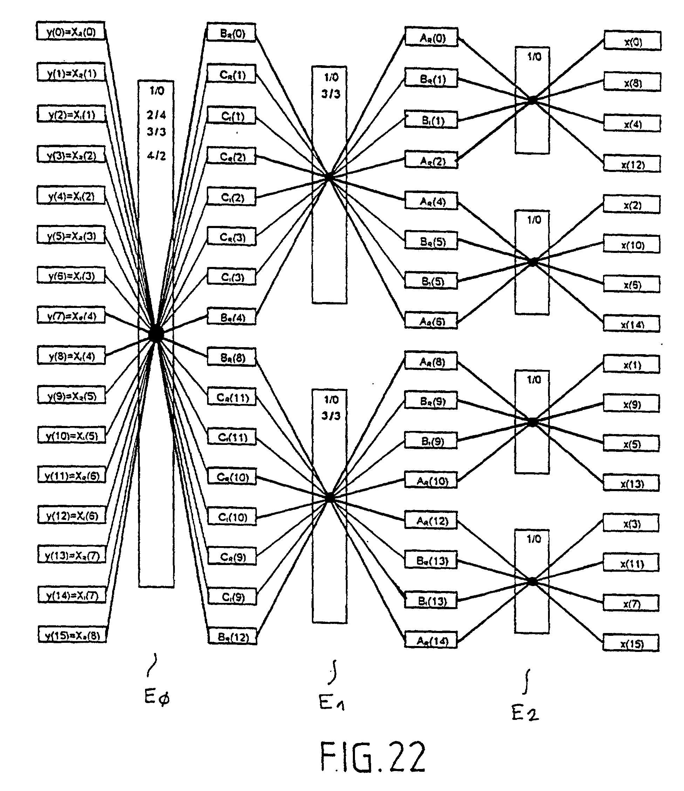

Un mode de réalisation d'une telle transformation est représenté à la figure 22. Il se déduit du mode de réalisation de la figure 12 en inversant l'agencement fonctionnel des étapes de transformation de la figure 12 (image en miroir de ce qu'il est pour un entrelacement temporel). Ce mode de réalisation permet de calculer la transformée de Fourier rapide inverse d'une suite de 16 échantillons réels y(n) représentatifs d'une suite de 16 échantillons complexes X(n) conjugués deux à deux. Les coefficients $W^s$ sont par conséquent du type $e^{j(2\pi s/N)}$.

Ce mode de réalisation comprend trois étapes de transformation $E_p$ avec $0 \le p \le 2$. A chaque étape de transformation $E_p$, les circuits croisillons sont désormais répartis en $2^p$ blocs de calcul, ces blocs de calcul étant ordonnés à chaque étape selon un rang q croissant allant de 0 à $2^p-1$. Chaque bloc de calcul comporte un circuit croisillon de bord et $N/2^{p+2}-1$ circuits croisillons internes. Les échantillons y(n) sont appliqués dans l'ordre de l'indice n à la première étape.

Les rangs des échantillons traités par un même circuit croisillon sont définis de la manière suivante: si on considère à l'étape $E_\beta$ un circuit croisillon de bord appartenant au bloc de calcul de rang $\alpha$, il transforme les échantillons d'entrée de rang $2^{\mu-\beta}\alpha$, $2^{\mu-\beta}\alpha+2^{\mu-\beta-1}-1$, $2^{\mu-\beta}\alpha+2^{\mu-\beta-1}$, $2^{\mu-\beta}\alpha+2^{\mu-\beta}-1$ en des échantillons de sortie de même rang et, si on considère à l'étape $E_\beta$ un circuit croisillon interne de rang $\tau$ dans le bloc de calcul de rang $\alpha$, il transforme les échantillons d'entrée de rang $2^{\mu-\beta}\alpha+2\tau+1$, $2^{\mu-\beta}\alpha+2\tau+2$, $2^{\mu-\beta}\alpha+2^{\mu-\beta}-2\tau-3$, $2^{\mu-\beta}\alpha+2^{\mu-\beta}-2\tau-2$ en des échantillons de sortie de même rang. Enfin, le coefficient affecté au circuit croisillon interne de rang $\tau$ du bloc de calcul de rang $\alpha$ à l'étape $E_\beta$ est égal à $W^\delta$ avec $\delta = (\tau+1).2^\beta$.

Les échantillons réels x(n) obtenus en fin de procédé sont délivrés dans l'ordre binaire inverse de l'indice n.

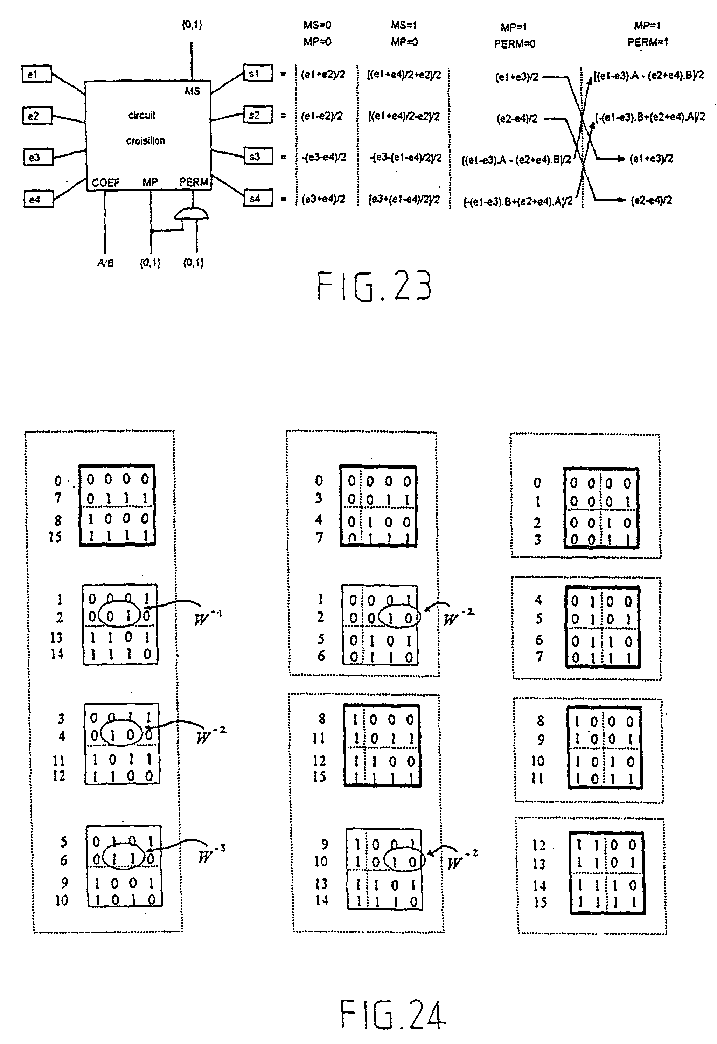

Au niveau des circuits croisillons, les coefficients $W^s$ sont du type $e^{j(2\pi s/N)}$ et, les entrées et les sorties ont été interverties par rapport au mode de réalisation de la figure 12. En conséquence, les opérations effectuées par les circuits croisillons de ce mode de réalisation sont différentes de celles effectuées par les circuits croisillons de la figure 12. Un modèle de circuit croisillon associé au mode de réalisation de la figure 22 est représenté à la figure 23.

Tout comme le modèle associé à la figure 12, il comporte quatre entrées et quatre sorties de données ainsi que quatre entrées supplémentaires respectivement de mode primaire MP, de mode secondaire MS, de permutation PERM et de coefficient COEF. Le signal de mode primaire vaut 0 s'il s'agit d'un circuit croisillon de bord et 1 s'il s'agit d'un circuit croisillon interne. Le signal de permutation vaut 0 pour les valeurs paires du rang q et 1 pour les valeurs impaires. Enfin, le signal de mode secondaire vaut 1 si le circuit croisillon de bord est utilisé pour la mise en oeuvre de la première étape et 0 sinon.

Les opérations de calcul effectuées par ce circuit croisillon sont les suivantes ($W^s=A+j.B$):

(1) si les signaux de mode primaire et de mode secondaire sont à 0:

$$s1 = (e1 + e2)/2$$

$$s2 = (e1 - e2)/2$$

$$s3 = (e4 - e3)/2$$

$$s4 = (e3 + e4)/2$$

(2) si le signal de mode primaire est à 0 et le signal de mode secondaire est à 1:

$$s1 = [(e1+e4)/2+e2]/2$$

$$s2 = [(e1+e4)/2-e2]/2$$

$$s3 = -[e3-(e1-e4)/2]/2$$

$$s4 = [e3+(e1-e4)/2]/2$$

(3) si le signal de mode primaire est à 1 et le signal de permutation à 0:

$$s1 =(e1+e3)/2$$

$$s2 = (e2-e4)/2$$

$$s3 = [(e1-e3).A - (e2+e4).B]/2$$

$$s4 = [-(e1-e3).B + (e2+e4).A]/2$$

(4) si le signal de mode primaire est à 1 et le signal de permutation à 1:

$$s1 = [(e1-e3).A - (e2+e4).B]/2$$

$$s2 = [-(e1-e3).B + (e2+e4).A]/2$$

$$s3 = (e1+e3)/2$$

$$s4 = (e2-e4)/2$$

Ce modèle est déduit du modèle de la figure 13 en intervertissant les valeurs e1, e2, e3, e4 et les valeurs si, s2, s3, s4, et en remplaçant B par -B car le coefficient $W^s$ est à présent du type $e^{j(2\pi s/N)}$. Etant donné que A et B représentent le cosinus et le sinus d'un même nombre, on a en fait $A^2+B^2=1$. Les expressions de si, s2, s3, s4 s'en trouvent simplifiées.

Selon l'invention, des adresses sont par ailleurs générées pour l'adressage des échantillons. Il est prévu de générer deux adresses binaires de $\mu$ bits par circuit croisillon, chaque adresse binaire correspondant au rang d'un échantillon d'entrée du circuit croisillon. Les adresses des deux autres échantillons à appliquer sur les entrées du circuit croisillon sont obtenus en inversant les $\mu$-p bits de poids faible des deux premières adresses.

De la même façon que pour les procédés de transformation fonctionnant selon un entrelacement temporel, les deux adresses binaires produites sont consécutives s'il s'agit d'un circuit croisillon interne. S'il s'agit d'un circuit croisillon de bord, les $\mu$-p bits de poids faible de la première adresse générée sont égaux à 0, et les $\mu$-p bits de poids faible de la seconde adresse forment un nombre égal à $N/2^{p+1}-1$. A titre d'illustration, les adresses produites pour le circuit de transformation de la figure 22 sont rassemblées à la figure 24.

Avantageusement, on pourra prévoir de stocker les échantillons d'adresse paire et les échantillons d'adresse impaire dans deux mémoires distinctes afin de diminuer le temps de traitement de l'opération de transformation.

Enfin, les adresses générées pour adresser les échantillons sont également utilisés pour adresser les coefficients $W^s$. La valeur du paramètre s est utilisé pour adresser le coefficient $W^s$ correspondant. Dans cet mode de réalisation, le paramètre s est égal:

- si $\mu$-p-1=$\mu$-2, au nombre formé par les $\mu$-p-1 bits de poids faible de la seconde adresse produite pour ledit circuit croisillon interne,
- si $\mu$-p-1<$\mu$-2, au nombre formé par les $\mu$-p-1 bits de poids faible de la seconde adresse produite pour ledit circuit croisillon interne, suivi de p-1 bits à zéro en fin de nombre,
- si $\mu$-p-1>$\mu$-2, au nombre formé par les $\mu$-p-1 bits de poids faible de la seconde adresse produite pour ledit circuit croisillon interne, ôté de ses p+1 bits de poids faible. Ce cas correspond à la première étape (p=0) des procédés de transformation fonctionnant selon un algorithme avec entrelacement fréquentiel.

## Revendications

1. Procédé de calcul de la transformée de Fourier rapide ou de la transformée de Fourier rapide inverse d'un signal numérique défini par une suite de N échantillons réels de départ x(n), avec N puissance de deux et n $\in$ [0..N-1], comportant des étapes successives de transformation (2) pour transformer des échantillons d'entrée en échantillons de sortie, l'ensemble des étapes de transformation étant effectué au moyen d'un unique jeu de circuits croisillons à plusieurs entrées et plusieurs sorties dont le mode opératoire est changé sélectivement à chaque étape de transformation, les échantillons d'entrée et de sortie de chaque étape de transformation étant stockés dans une mémoire de stockage, une suite de N échantillons de sortie y(n) représentatifs de la transformée de Fourier rapide ou rapide inverse des échantillons de départ x(n) étant délivrée à la dernière étape de transformation,

**caractérisé en ce que** les échantillons de sortie y(n) sont réels,

et **en ce que** les échantillons de sortie d'un circuit croisillon se substituent dans la mémoire de stockage aux échantillons d'entrée de même rang correspondants, de telle sorte que, si les échantillons de départ x(n) traités à la première étape de transformation sont classés dans l'ordre binaire inverse de leur indice n, les échantillons de sortie y(n) sont délivrés à la dernière étape de transformation dans l'ordre croissant de l'indice n, lesquels échantillons de sortie sont définis par les relations suivantes:

$$y(0) = Re[X(0)]$$

$$y(n) = Re[X((n+1)/2)]$$

pour n impair et différent de N-1

$$y(n) = Im[X(n/2)]$$

pour n pair et différent de 0

$$y(N-1) = Re[X(N/2)]$$

où les échantillons X(n), avec $n \in [0..N-1]$, désignent les échantillons complexes de la suite correspondant à la transformée de Fourier rapide ou rapide inverse de la suite des échantillons de départ x(n).

2.  Procédé de calcul de la transformée de Fourier rapide ou de la transformée de Fourier rapide inverse d'un signal numérique défini par une suite de N échantillons complexes X(n) conjugués deux à deux, **caractérisé en ce que** le calcul est effectué sur une suite de N échantillons réels de départ y(n) représentative de la suite d'échantillons complexes X(n), avec N puissance de deux et $n \in [0..N-1]$, les échantillons de départ y(n) étant définis de la manière suivante :

$$y(0) = Re[X(0)]$$

$$y(n) = Re[X((n+1)/2)]$$

pour n impair et différent de N-1

$$y(n) = Im[X(n/2)]$$

pour n pair et différent de 0

$$y(N-1) = Re[X(N/2)]$$

**en ce que** le procédé comporte des étapes successives de transformation pour transformer des échantillons d'entrée en échantillons de sortie, une suite de N échantillons de sortie x(n) réels représentatifs de cette transformée de Fourier rapide ou rapide inverse étant délivrée à la dernière étape de transformation, l'ensemble des étapes de transformation étant effectué au moyen d'un unique jeu de circuits croisillons à plusieurs entrées et plusieurs sorties dont le mode opératoire est changé sélectivement à chaque étape de transformation, les échantillons d'entrée et de sortie de chaque étape de transformation étant stockés dans une mémoire de stockage,

et **en ce que** les échantillons de sortie d'un circuit croisillon se substituent dans la mémoire de stockage aux échantillons d'entrée de même rang correspondants, de telle sorte que, si les échantillons de départ y(n) traités par la première étape de transformation sont classés dans l'ordre croissant de l'indice n, les échantillons de sortie x(n) sont délivrés à la dernière étape de transformation dans l'ordre binaire inverse de l'indice n.

**3.** Procédé de calcul selon la revendication 1 ou 2, **caractérisé en ce que**, à chaque étape de transformation, chaque circuit croisillon transforme des couples d'échantillon d'entrée, les rangs des échantillons d'entrée d'un même couple dans la suite des échantillons d'entrée de ladite étape de transformation étant symétriques par rapport à un milieu entre les valeurs de rang extrêmes des échantillons d'entrée transformés par ledit circuit croisillon.

**4.** Procédé de calcul selon la revendication 3, **caractérisé en ce qu'**il comporte $\mu$-1 étapes de transformation $E_p$ avec $\mu=\log_2(N)$ et $p \in [0..\mu-2]$.

**5.** Procédé de calcul selon la revendication 4 elle-même dépendante de la revendication 3 elle-même dépendante de la revendication 1, **caractérisé en ce qu'**il comporte en outre :

- une étape préliminaire pour modifier l'ordre des échantillons de départ x(n) rangés dans l'ordre croissant de l'indice n et les présenter dans l'ordre binaire inverse de l'indice n à la première étape de transformation, et
- une étape finale pour traiter la suite d'échantillons de sortie y(n) et délivrer une suite de N échantillons complexes X(n) conjugués correspondant à la transformée de Fourier rapide ou rapide inverse de la suite des échantillons de départ x(n).

**6.** Procédé de calcul selon la revendication 4 elle-même dépendante de la revendication 3 elle-même dépendante de la revendication 1, ou selon la revendication 5, **caractérisé en ce que**, à chaque étape de transformation $E_p$, les circuits croisillons sont répartis en $N/2^{p+2}$ blocs de calcul,

en ce que chaque bloc de calcul comporte un circuit croisillon de bord et/ou $2^p$-1 circuits croisillons internes, **en ce que** le circuit croisillon de bord du bloc de calcul de rang $\alpha$ à l'étape de transformation $E_\beta$ transforme les échantillons d'entrée de rang $2^{\beta+2}\alpha$, $2^{\beta+2}\alpha+2^{\beta+1}$-1, $2^{\beta+2}\alpha+2^{\beta+1}$, $2^{\beta+2}\alpha+2^{\beta+2}$-1 en des échantillons de sortie de même rang, et **en ce que** le circuit croisillon interne de rang $\tau$ du bloc de calcul de rang $\alpha$ à l'étape de transformation $E_\beta$ transforme les échantillons d'entrée de rang $2^{\beta+2}\alpha+2\tau+1$, $2^{\beta+2}\alpha+2\tau+2$, $2^{\beta+2}\alpha+2^{\beta+2}$-2$\tau$-3, $2^{\beta+2}\alpha+2^{\beta+2}$-2$\tau$-2 en des échantillons de sortie de même rang, avec $\beta\geq1$.

**7.** Procédé de calcul selon la revendication 6, **caractérisé en ce que**, à chaque circuit croisillon est affecté un coefficient $W^s$, coefficient sur lequel est basé l'opération de calcul à l'intérieur du circuit croisillon, ledit coefficient étant égal à $e^{-j(2\pi s/N)}$ avec $s \in [0..N/4-1]$ dans le cas d'une transformée de Fourier rapide et est égal à $e^{j(2\pi s/N)}$ avec $s \in [0..N/4-1]$ dans le cas d'une transformée de Fourier rapide inverse.

**8.** Procédé de calcul selon la revendication 7, **caractérisé en ce que**, au circuit croisillon interne de rang $\tau$ du bloc de calcul de rang $\alpha$ à l'étape de transformation $E_\beta$ est affecté le coefficient $W^\delta$ avec $\delta = (\tau+1).(N/2^{\beta+2})$.

**9.** Procédé de calcul selon la revendication 8, **caractérisé en ce que** les circuits croisillons destinés à mettre en oeuvre les étapes de transformation sont tous de même type et comportent

- quatre entrées pour recevoir des échantillons d'entrée et quatre sorties pour délivrer des échantillons de sortie,
- quatre entrées supplémentaires respectivement de mode primaire, de mode secondaire, de permutation et de coefficient,

afin d'appliquer sélectivement sur les échantillons d'entrée, des opérations de transformation différentes déterminées chacune par les valeurs attribuées à des signaux de mode primaire, de mode secondaire, de permutation et à un coefficient admis sur lesdites entrées supplémentaires correspondantes.

**10.** Procédé de calcul selon la revendication 9, **caractérisé en ce que**, pour chaque circuit croisillon, le signal de mode primaire vaut 0 s'il s'agit d'un circuit croisillon de bord et 1 s'il s'agit d'un circuit croisillon interne, **en ce que** le signal de permutation vaut 0 pour les blocs de calcul de rang pair, y compris le rang 0, et 1 pour les autres.

**11.** Procédé de calcul selon la revendication 10, **caractérisé en ce que**, à l'étape de transformation Ep, chaque bloc de calcul comporte un circuit croisillon de bord et $2^p$-1 circuits croisillons internes.

**12.** Procédé de calcul selon la revendication 11, **caractérisé en ce que** le signal de mode secondaire vaut 1 si le circuit croisillon de bord est utilisé pour la dernière étape de transformation et 0 sinon.

**13.** Procédé de calcul selon la revendication 12, **caractérisé en ce que**, pour quatre échantillons d'entrée e1, e2, e3 et e4 et pour un coefficient complexe $W^s$=A+j.B, le circuit croisillon fournit les échantillons de sortie si, s2, s3 et s4 suivants

(1) si les signaux de mode primaire et de mode secondaire sont à 0:

$$s1 = e1 + e2$$

$$s2 = e1 - e2$$

$$s3 = e4 - e3$$

$$s4 = e3 + e4$$

(2) si le signal de mode primaire est à 0 et le signal de mode secondaire est à 1:

$$s1 = e1 + e2 + e3 + e4$$

$$s2 = e1 - e2$$

$$s3 = e4 - e3$$

$$s4 = (e1 + e2) -(e3 + e4)$$

(3) si le signal de mode primaire est à 1 et le signal de permutation à 0:

$$s1 = e1 + A.e3 -B.e4$$

$$s2 = e2 + B.e3 + A.e4$$

$$s3 = e1 - A.e3 + B.e4$$

$$s4 = -e2 + B.e3 + A.e4$$

(4) si le signal de mode primaire est à 1 et le signal de permutation à 1:

$$s1 = e1 - A.e3 + B.e4$$

$$s2 = -e2 + B.e3 + A.e4$$

$$s3 = e1 + A.e3 - B.e4$$

$$s4 = e2 + B.e3 + A.e4$$

**14.** Procédé de calcul selon la revendication 10, **caractérisé en ce que**, à l'étape de transformation $E_p$, chaque bloc de calcul comporte:

- $2^p-1$ circuits croisillons internes et un circuit croisillon de bord pour les valeurs paires de l'indice p ainsi que pour la dernière étape de transformation si $\mu$ est pair, et
- $2^p-1$ circuits croisillons internes sinon.

**15.** Procédé de calcul selon la revendication 13, **caractérisé en ce que**, le signal de mode secondaire vaut 1 si le circuit croisillon de bord est utilisé pour la dernière étape de transformation avec $\mu$ impair et 0 sinon.

**16.** Procédé de calcul selon la revendication 15, **caractérisé en ce que**, pour quatre échantillons d'entrée e1, e2, e3 et e4 et pour un coefficient complexe $W^s=A+j.B$, le circuit croisillon fournit les échantillons de sortie s1, s2, s3 et s4 suivants

(1) si les signaux de mode primaire, de mode secondaire et de permutation sont à 0:

$$s1 = e1 + e2 + e3 + e4$$

$$s2 = e1 - e2$$

$$s3 = e4 - e3$$

$$s4 = (e1 + e2)-(e3 + e4)$$

(2) si le signal de mode primaire est à 0 et le signal de mode secondaire est à 1:

$$s1 = e1 + e4$$

$$s2 = e2$$

$$s3 = e3$$

$$s4 = e1 - e4$$

(3) si le signal de mode primaire est à 0 et le signal de permutation à 1:

$$s1 = (e3 + e4)-(e1+e2)$$

$$s2 = e1 - e2$$

$$s3 = e4 - e3$$

$$s4 = e1 + e2 + e3 + e4$$

(4) si le signal de mode primaire est à 1 et le signal de permutation à 0:

$$s1 = e1 + A.e3 - B.e4$$

$$s2 = e2 + B.e3 + A.e4$$

$$s3 = e1 - A.e3 + B.e4$$

$$s4 = -e2 + B.e3 + A.e4$$

(5) si le signal de mode primaire est à 1 et le signal de permutation à 1:

$$s1 = e1 - A.e3 + B.e4$$

$$s2 = -e2 + B.e3 + A.e4$$

$$s3 = e1 + A.e3 - B.e4$$

$$s4 = e2 + B.e3 + A.e4$$

**17.** Procédé de calcul selon la revendication 10, **caractérisé en ce que**, à l'étape de transformation $E_p$, chaque bloc de calcul comporte:

- $2^p - 1$ circuits croisillons internes et un circuit croisillon de bord pour les valeurs paires de l'indice p, et
- $2^p - 1$ circuits croisillons internes sinon.

**18.** Procédé de calcul selon la revendication 17, **caractérisé en ce que** le signal de mode secondaire vaut 1 si le circuit croisillon de bord est utilisé pour la première étape de transformation avec μ pair et 0 sinon.

**19.** Procédé de calcul selon la revendication 18, **caractérisé en ce que**, pour quatre échantillons d'entrée e1, e2, e3 et e4 et pour un coefficient complexe $W^s = A + j.B$, le circuit croisillon fournit les échantillons de sortie s1, s2, s3 et s4 suivants

(1) si le signal de mode primaire est à 0 et le signal de mode secondaire est à 1:

$$s1 = e1 + e2$$

$$s2 = e1 - e2$$

$$s3 = e4 - e3$$

$$s4 = e3 + e4$$

(2) si les signaux de mode primaire, de mode secondaire et de permutation sont à 0:

$$s1 = e1 + e2 + e3 + e4$$

$$s2 = e1 - e2$$

$$s3 = e4 - e3$$

$$s4 = (e1 + e2)-(e3 + e4)$$

(3) si les signaux de mode primaire et de mode secondaire sont à 0 et le signal de permutation à 1:

$$s1 = (e3 + e4)-(e1 + e2)$$

$$s2 = e1 - e2$$

$$s3 = e4 - e3$$

$$s4 = e1 + e2 + e3 + e4$$

(4) si le signal de mode primaire est à 1 et le signal de permutation à 0:

$$s1 = e1 + A.e3 -B.e4$$

$$s2 = e2 + B.e3 + A.e4$$

$$s3 = e1 - A.e3 + B.e4$$

$$s4 = -e2 + B.e3 + A.e4$$

(5) si le signal de mode primaire est à 1 et le signal de permutation à 1:

$$s1 = e1 - A.e3 + B.e4$$

$$s2 = -e2 + B.e3 + A.e4$$

$$s3 = e1 + A.e3 -B.e4$$

$$s4 = e2 + B.e3 + A.e4$$

**20.** Procédé de calcul selon la revendication 8, **caractérisé en ce que** les circuits croisillons destinés à mettre en oeuvre les étapes de transformation sont tous de même type et comportent

- quatre entrées pour recevoir des échantillons d'entrée et quatre sorties pour délivrer des échantillons de sortie,
- trois entrées supplémentaires respectivement de mode primaire, de permutation et de coefficient,

afin d'appliquer sélectivement sur les échantillons d'entrée, des opérations de transformation différentes déterminées chacune par les valeurs attribuées à des signaux de mode primaire, de permutation et à un coefficient admis sur lesdites entrées supplémentaires correspondantes,

et **en ce que** l'étape finale effectue en outre une addition et une soustraction entre le premier et le dernier échantillon de sortie délivrés à la dernière étape de transformation.

21. Procédé de calcul selon la revendication 20, **caractérisé en ce que**, à l'étape de transformation $E_p$, chaque bloc de.calcul comporte un circuit croisillon de bord et $2^p$-1 circuits croisillons internes.

22. Procédé de calcul selon la revendication 21, **caractérisé en ce que**, pour quatre échantillons d'entrée e1, e2, e3 et e4 et pour un coefficient complexe $W^s=A+j.B$, le circuit croisillon fournit les échantillons de sortie si, s2, s3 et s4 suivants

(1) si le signal de mode primaire est à 0:

$$s1 = e1 + e2$$

$$s2 = e1 - e2$$

$$s3 = e4 - e3$$

$$s4 = e3 + e4$$

(2) si le signal de mode primaire est à 1 et le signal de permutation à 0:

$$s1 = e1 + A.e3 -B.e4$$

$$s2 = e2 + B.e3 + A.e4$$

$$s3 = e1 - A.e3 + B.e4$$

$$s4 = -e2 + B.e3 + A.e4$$

(3) si le signal de mode primaire est à 1 et le signal de permutation à 1:

$$s1 = e1 - A.e3 + B.e4$$

$$s2 = -e2 + B.e3 + A.e4$$

$$s3 = e1 + A.e3 -B.e4$$

$$s4 = e2 + B.e3 + A.e4$$

**23.** Procédé de calcul selon la revendication 9 ou 20, **caractérisé en ce que** des première et seconde adresses binaires de $\mu$ bits sont générées pour chaque circuit croisillon, chaque adresse binaire correspondant au rang d'un échantillon d'entrée dudit circuit croisillon et la seconde adresse binaire étant supérieure à la première adresse binaire.

**24.** Procédé de calcul selon la revendication 23, **caractérisé en ce que** lesdites première et seconde adresses binaires sont consécutives s'il s'agit d'un circuit croisillon interne.

**25.** Procédé de calcul selon la revendication 23 ou 24, **caractérisé en ce que**, s'il s'agit d'un circuit croisillon de bord, les p+2 bits de poids faible de la première adresse sont égaux à 0, et les p+2 bits de poids faible de la seconde adresse forment un nombre égal à $2^{p+1}-1$.

**26.** Procédé de calcul selon la revendication 24 ou 25, **caractérisé en ce que** l'adresse des deux autres échantillons à appliquer sur les entrées du circuit croisillon, qu'il soit de bord ou interne, sont obtenus en inversant les (p+2) bits de poids faible desdites première et seconde adresses produites.

**27.** Procédé de calcul selon la revendication 26, **caractérisé en ce que** les échantillons d'adresse paire et les échantillons d'adresse impaire sont stockés dans deux mémoires distinctes.

**28.** Procédé de calcul selon la revendication 25, **caractérisé en ce que** la valeur du paramètre s du coefficient $W^s$ affecté à un circuit croisillon interne à l'étape de transformation $E_p$ est codé sur $\mu$-2 bits, et correspond:

- si p+1=$\mu$-2, au nombre formé par les p+1 bits de poids faible de la seconde adresse binaire produite pour ledit circuit croisillon interne,
- si p+1<$\mu$-2, au nombre formé par les p+1 bits de poids faible de la seconde adresse binaire produite pour ledit circuit croisillon interne, suivi de $\mu$-p-3 bits à zéro en fin de nombre,
- si p+1>$\mu$-2, au nombre formé par les p+1 bits de poids faible de la seconde adresse binaire produite pour ledit circuit croisillon interne, ôté de ses $\mu$-p-1 bits de poids faible.

**29.** Procédé de calcul selon la revendication 4 elle-même dépendante de la revendication 3 elle-même dépendante de la revendication 2, **caractérisé en ce que**, à chaque étape de transformation $E_p$, les circuits croisillons sont répartis en $2^p$ blocs de calcul,

**en ce que** chaque bloc de calcul comporte un circuit croisillon de bord et $N/2^{p+2}-1$ circuits croisillons internes,
**en ce que** le circuit croisillon de bord du bloc de calcul de rang $\alpha$ à l'étape de transformation $E_\beta$ transforme les échantillons d'entrée de rang $2^{\mu-\beta}\alpha$, $2^{\mu-\beta}\alpha+2^{\mu-\beta-1}-1$, $2^{\mu-\beta}\alpha+2^{\mu-\beta-1}$, $2^{\mu-\beta}\alpha+2^{\mu-\beta}-1$ en des échantillons de sortie de même rang,
et **en ce que** le circuit croisillon interne de rang $\tau$ du bloc de calcul de rang $\alpha$ à l'étape de transformation $E_\beta$ transforme les échantillons d'entrée de rang $2^{\mu-\beta}\alpha+2\tau+1$, $2^{\mu-\beta}\alpha+2\tau+2$, $2^{\mu-\beta}\alpha+2^{\mu-\beta}-2\tau-3$, $2^{\mu-\beta}\alpha+2^{\mu-\beta}-2\tau-2$ en des échantillons de sortie de même rang.

**30.** Procédé de calcul selon la revendication 29, **caractérisé en ce qu'**il comporte en outre une étape finale pour modifier l'ordre des échantillons de sortie délivrés à la dernière étape de transformation et les classer dans l'ordre croissant de l'indice n.

**31.** Procédé de calcul selon la revendication 29 ou 30, **caractérisé en ce que**, à chaque circuit croisillon est affecté un coefficient $W^s$, coefficient sur lequel est basé l'opération de calcul à l'intérieur du circuit croisillon, ledit coefficient étant égal à $e^{-j(2\pi s/N)}$ avec $s \in [0..N/4-1]$ dans le cas d'une transformée de Fourier rapide et est égal à $e^{j(2\pi s/N)}$ avec $s \in [0..N/4-1]$ dans le cas d'une transformée de Fourier rapide inverse.

**32.** Procédé de calcul selon la revendication 31, **caractérisé en ce que**, au circuit croisillon interne de rang $\tau$ du bloc de calcul de rang $\alpha$ à l'étape de transformation $E_\beta$ est associé le coefficient $W^\delta$ avec $\delta = (\tau+1).2^\beta$.

**33.** Procédé de calcul selon la revendication 32, **caractérisé en ce que** les circuits croisillons pour mettre en oeuvre les étapes de transformation sont tous de même type et comportent

- quatre entrées pour recevoir des échantillons d'entrée et quatre sorties pour délivrer des échantillons de sortie,
- quatre entrées supplémentaires respectivement de mode primaire, de mode secondaire, de permutation et de coefficient,

afin d'appliquer sélectivement sur les échantillons d'entrée, des opérations de transformation différentes déterminées chacune par les valeurs attribuées à des signaux de mode primaire, de mode secondaire, de permutation et à un coefficient admis sur lesdites entrées supplémentaires correspondantes.

**34.** Procédé de calcul selon la revendication 33, **caractérisé en ce que**, pour chaque circuit croisillon, le signal de mode primaire vaut 0 s'il s'agit d'un circuit croisillon de bord et 1 s'il s'agit d'un circuit croisillon interne.
et **en ce que** le signal de permutation vaut 0 pour les blocs de calcul de rang pair, y compris le rang 0, et 1 pour les valeurs impaires.

**35.** Procédé de calcul selon la revendication 31 ou 34, **caractérisé en ce que** le signal de mode secondaire vaut 1 si le circuit croisillon, qu'il soit de bord ou interne, est utilisé pour la première étape de transformation et 0 sinon.

**36.** Procédé de calcul selon la revendication 35, **caractérisé en ce que**, pour quatre échantillons d'entrée e1, e2, e3 et e4 et pour un coefficient complexe $W^s=A+j.B$, le circuit croisillon fournit les échantillons de sortie s1, s2, s3 et s4 suivants

(1) si les signaux de mode primaire et de mode secondaire sont à 0:

$$s1 = (e1 + e2)/2$$

$$s2 = (e1 - e2)/2$$

$$s3 = (e4 - e3)/2$$

$$s4 = (e3 + e4)/2$$

(2) si le signal de mode primaire est à 0 et le signal de mode secondaire est à 1:

$$s1 = [(e1+e4)/2+e2]/2$$

$$s2 = [(e1+e4)/2-e2]/2$$

$$s3 = -[e3-(e1-e4)/2]/2$$

$$s4 = [e3+(e1-e4)/2]/2$$

(3) si le signal de mode primaire est à 1 et le signal de permutation à 0:

$$s1 =(e1+e3)/2$$

$$s2 =(e2-e4)/2$$

$$s3 =[(e1-e3).A - (e2+e4).B]/2$$

$$s4 =[-(e1-e3).B +(e2+e4).A]/2$$

(4) si le signal de mode primaire est à 1 et le signal de permutation à 1:

$$s1 =[(e1-e3).A - (e2+e4).B]/2$$

$$s2 =[-(e1-e3).B +(e2+e4).A]/2$$

$$s3 =(e1+e3)/2$$

$$s4 =(e2-e4)/2$$

**37.** Procédé de calcul selon la revendication 33, **caractérisé en ce que** des première et seconde adresses binaires de $\mu$ bits sont générées pour chaque circuit croisillon, chaque adresse binaire correspondant au rang d'un échantillon d'entrée dudit circuit croisillon et la seconde adresse binaire étant supérieure à la première adresse binaire.

**38.** Procédé de calcul selon la revendication 37, **caractérisé en ce que** lesdites première et seconde adresses binaires sont consécutives s'il s'agit d'un circuit croisillon interne.

**39.** Procédé de calcul selon la revendication 37 ou 38, **caractérisé en ce que**, s'il s'agit d'un circuit croisillon de bord, les $\mu$-p bits de poids faible de la première adresse sont égaux à 0, et les $\mu$-p bits de poids faible de la seconde adresse forment un nombre égal à $N/2^{p+1}-1$.

**40.** Procédé de calcul selon la revendication 38 ou 39, **caractérisé en ce que** l'adresse des deux autres échantillons à appliquer sur les entrées du circuit croisillon sont obtenus en inversant les $\mu$-p bits de poids faible des deux adresses produites.

**41.** Procédé de calcul selon la revendication 40, **caractérisé en ce que** les échantillons d'adresse paire et les échantillons d'adresse impaire sont stockés dans deux mémoires distinctes.

**42.** Procédé de calcul selon la revendication 41, **caractérisé en ce que** la valeur du paramètre s du coefficient $W^s$ affecté à un circuit croisillon interne à l'étape de transformation $E_p$ est codé sur $\mu$-2 bits, et correspond:

- si $\mu$-p-1=$\mu$-2, au nombre formé par les $\mu$-p-1 bits de poids faible de la seconde adresse produite pour ledit circuit croisillon interne,
- si $\mu$-p-1<$\mu$-2, au nombre formé par les $\mu$-p-1 bits de poids faible de la seconde adresse produite pour ledit circuit croisillon interne, suivi de p-1 bits à zéro en fin de nombre,
- si $\mu$-p-1>$\mu$-2, au nombre formé par les $\mu$-p-1 bits de poids faible de la seconde adresse produite pour ledit circuit croisillon interne, ôté de ses p+1 bits de poids faible.

**Patentansprüche**

**1.** Verfahren zur Berechnung der schnellen Fourier-Transformation und der schnellen Invers-Fourier-Transformation eines numerischen Signals in Form einer Folge von N reellen Anfangsabtastwerten von x(n), wobei N eine Potenz von Zwei ist und n $\in$ [0, ... N - 1], mit aufeinanderfolgenden Transformationsschritten (2) zum Transformieren von Eingängsabtastwerten in Ausgangsabtastwerte, wobei die Gruppe der Transformationsschritte mit Hilfe eines einzigen Satzes von Gitterschaltkreisen mit mehreren Eingängen und mehreren Ausgängen durchgeführt wird, dessen Betriebsart selektiv bei jedem Transformationsschritt geändert wird, wobei die Eingangsabtastwerte und Ausgangsabtastwerte jedes Transformationsschrittes in einem Massenspeicher gespeichert werden, wobei eine Folge von N Ausgangsabtastwerten y(n) der schnellen Fourier-Transformation oder schnellen Invers-Fourier-Transformation von Anfangsabtastwerten x(n) beim letzten Transformationsschritt ausgegeben werden, **dadurch gekennzeichnet, daß**

die Ausgangsabtastwerte y(n) reell sind und

die Ausgangsabtastwerte eines Gitterschaltkreises in dem Massenspeicher anstelle der Eingangsabtastwerte des gleichen entsprechenden Rangs treten, so daß, wenn die Anfangsabtastwerte x(n), die in dem ersten Transformationsschritt bearbeitet wurden, in binär umgekehrter Reihenfolge ihres Index n gruppiert werden, die Ausgangsabtastwerte y(n) bei dem letzten Transformationsschritt in mit dem Index n steigender Reihenfolge ausgegeben werden, wobei die Ausgangsabtastwerte definiert sind durch die folgenden Beziehungen:

$$y(0) = Re[X(0)]$$

$$y(n) = Re[X((n + 1)/2)],$$

wobei n ungerade und ungleich N-1

$$y(n) = Im[X(n/2)],$$

wobei n gerade und ungleich 0

$$y(N-1) = Re[X(N/2)]$$

wobei die Abtastwerte X(n) mit n $\in$ [0, ..., N-1] die komplexen Abtastwerte der Folge bezeichnen, die der schnellen Fourier-transformierten oder schnellen Inversen der Folge von Anfangsabtastwerten x(n) entsprechen.

2. Verfahren zur Berechnung der schnellen Fourier-Transformation und der schnellen Invers-Fourier-Transformation aus einem numerischen Signal in Form einer Folge von N komplexen Abtastwerten X(n), die paarweise konjugiert sind,
**dadurch gekennzeichnet, daß**
die Berechnung durchgeführt wird mit einer Folge von N reellen Anfangsabtastwerten y(n), die die Folge der komplexen Abtastwerte X(n) darstellen, wobei N eine Potenz von 2 und n $\in$ [0, ..., N-1] ist, wobei die Anfangsabtastwerte y(n) auf folgende Art definiert sind:

$$y(0) = Re[X(0)]$$

$$y(n) = Re[X((n + 1)/2)],$$

wobei n ungerade und ungleich N-1

$$y(n) = Im[X(n/2)],$$

wobei n gerade und ungleich 0

$$y(N-1) = Re[X(N/2)]$$

das Verfahren aufeinanderfolgende Transformationsschritte umfaßt zum Transformieren von Eingangsabtastwerten in Ausgangsabtastwerte, wobei eine Folge von N reellen Ausgangsabtastwerten x(n), die diese schnelle oder schnelle inverse Fourier-Transformierte darstellen, bei dem letzten Transformationsschritt ausgegeben werden, wobei die Gruppe von Transformationsschritten mittels eines einzigen Satzes von Gitterschaltkreisen mit mehreren Eingängen und mehreren Ausgängen durchgeführt werden, dessen Betriebsart selektiv bei jedem Transformationsschritt geändert wird, wobei die Eingangsabtastwerte und die Ausgangsabtastwerte jedes Transformationsschrittes in einem Massenspeicher abgespeichert werden, und

die Ausgangsabtastwerte eines Gitterschaltkreises in dem Massenspeicher anstelle der Eingangsabtastwerte des gleichen entsprechenden Ranges treten, so daß, wenn die Anfangsabtastwerte y(n), die im ersten Transformationsschritt bearbeitet wurden, in mit dem Index n steigender Ordnung gruppiert werden, die Ausgangsabtastwerte x(n) beim letzten Transformationsschritt in der binär inversen Reihenfolge zum Index n ausgegeben werden.

3. Verfahren zur Berechnung nach Anspruch 1 oder 2, **dadurch gekennzeichnet, daß** bei jedem Transformationsschritt jeder Gitterschaltkreis Eingangsabtastwertpaare transformiert, wobei der Rang von Eingangsabtastwerten eines gleichen Paares in der Folge von Eingangsabtastwerten des Transformationsschrittes in bezug auf einen Mittelwert der extremen Rangzahlen der Eingangsabtastwerte, die durch den Gitterschaltkreis transformiert wurden, symmetrisch sind.

4. Verfahren zur Berechnung nach Anspruch 3, **dadurch gekennzeichnet, daß** es $\mu$-1 Transformationsschritte $E_p$ umfaßt mit $\mu = \log_2(N)$ und $p \in [0, ..., \mu\text{-}2]$.

5. Verfahren zur Berechnung nach Anspruch 4, soweit dieser von Anspruch 3 und jener von Anspruch 1 abhängt, **dadurch gekennzeichnet, daß** es außerdem aufweist:

-   einen vorherigen Schritt zum Modifizieren der Reihenfolge der Anfangsabtastwerte x(n), die in mit dem Index n steigender Reihenfolge angeordnet sind, und zum Ausgeben dieser in binär inverser Reihenfolge zum Index n bei dem ersten Transformationsschritt und
-   einen abschließenden Schritt zum Bearbeiten der Folge von Ausgangsabtastwerten y(n) und Ausgeben einer Folge von N komplexen konjugierten Abtastwerten X(n) entsprechend der schnellen oder schnellen inversen Fourier-Transformierten der Folge von Anfangsabtastwerten x(n).

6. Verfahren zur Berechnung nach Anspruch 4, soweit dieser von Anspruch 3 und jener von Anspruch 1 abhängt, oder nach Anspruch 5, **dadurch gekennzeichnet, daß** bei jedem Transformationsschritt $E_p$ die Gitterschaltkreise aufgeteilt sind in $N/2^{p+2}$ Rechenblöcke,

jeder Rechenblock einen Randgitterschaltkreis und/oder $2^p$-1 innere Gitterschaltkreise umfaßt,

der Randgitterschaltkreis des Rechenblocks vom Rang $\alpha$ beim Transformationsschritt Eß die Eingangsabtastwerte vom Rang $2^{\beta+2}\alpha$, $2^{\beta+2}\alpha+2^{\beta+1}$-1, $2^{\beta+2}\alpha+2^{\beta+1}$, $2^{\beta+2}\alpha+2^{\beta+2}$-1 in Ausgangsabtastwerte des gleichen Ranges umwandelt, und

der innere Gitterschaltkreis vom Rang $\tau$ des Rechenblocks vom Rang $\alpha$ im Transformationsschritt $E_\beta$ die Eingangsabtastwerte vom Rang $2^{\beta+2}\alpha+2\tau+1$, $2^{\beta+2}\alpha+2\tau+2$, $2^{\beta+2}\alpha+2^{\beta+2}$-2$\tau$-3, $2^{\beta+2}\alpha+2^{\beta+2}$-2$\tau$-2 in Ausgangsabtastwerte des gleichen Rangs umwandelt mit $\beta \geq 1$.

7. Verfahren zur Berechnung nach Anspruch 6, **dadurch gekennzeichnet, daß** jeder Gitterschaltkreis mit einem Koeffizienten $W^s$ versehen ist, wobei auf dem Koeffizienten die Operation der inneren Berechnung des Gitterschaltkreises beruht, wobei der Koeffizient gleich $e^{-j(2\pi s/N)}$ mit $s \in [0, .... N/4\text{-}1]$ für den Fall einer schnellen Fourier-Transformierten ist und gleich $e^{j(2\pi s/N)}$ mit $s \in [0, ..., N/4\text{-}1]$ im Fall einer schnellen inversen Fourier-Transformierten ist.

8. Verfahren zur Berechnung nach Anspruch 7, **dadurch gekennzeichnet, daß** der innere Gitterschaltkreis vom Rang $\tau$ des Rechenblockes vom Rang $\alpha$ beim Transformationsschritt $E_\beta$ versehen ist mit dem Koeffizienten $W^\delta$ mit $\delta = (\tau + 1) \cdot (N/2^{\beta+2})$.

9. Verfahren zur Berechnung nach Anspruch 8, **dadurch gekennzeichnet, daß** die Gitterschaltkreise für das Umsetzen der Transformationsschritte alle vom gleichen Typ sind und umfassen:

-   vier Eingänge zum Einlesen von Eingangsabtastwerten und vier Ausgänge zum Ausgeben von Ausgangsabtastwerten,
-   vier zusätzliche Eingänge für jeweils Primärbetrieb, Sekundärbetrieb, Permutation und Koeffizienten,

um selektiv auf die Eingangsabtastwerte verschiedene Transformationsoperationen anzuwenden, die jeweils durch die Werte der Primärbetriebs-, Sekundärbetriebs-, Permutationssignale und eines Koeffizienten bestimmt werden, die an diesen entsprechenden zusätzlichen Eingängen zugelassen sind.

10. Verfahren zur Berechnung nach Anspruch 9, **dadurch gekennzeichnet, daß**

für jeden Gitterschaltkreis das Primärbetriebssignal den Wert 0 hat, wenn es sich um einen Randgitterschaltkreis handelt, und 1, wenn es sich um einen inneren Gitterschaltkreis handelt, und
das Permutationssignal den Wert 0 hat bei den Rechenblöcken mit geradzahligem Rang einschließlich dem Rang 0, und 1 sonst.

**11.** Verfahren zur Berechnung nach Anspruch 10, **dadurch gekennzeichnet, daß** bei dem Transformationsschritt Ep jeder Rechenblock einen Randgitterschaltkreis und $2^p$-1 innere Gitterschaltkreise umfaßt.

**12.** Verfahren zur Berechnung nach Anspruch 11, **dadurch gekennzeichnet, daß** das Sekundärbetriebssignal den Wert 1 hat, wenn der Randgitterschaltkreis verwendet wird für den letzten Transformationsschritt, und 0 sonst.

**13.** Verfahren zur Berechnung nach Anspruch 12, **dadurch gekennzeichnet, daß** bei vier Eingangsabtastwerten e1, e2, e3 und e4 und bei einem komplexen Koeffizienten $W^s$ = A + j · B der Gitterschaltkreis die Ausgangsabtastwerte s1, s2, s3 und s4 wie folgt ausgibt:

(1) wenn das Primärbetriebs- und Sekundärbetriebssignal 0 ist:

$$s1 = e1 + e2$$

$$s2 = e1 - e2$$

$$s3 = e4 - e3$$

$$s4 = e3 + e4$$

(2) wenn das Primärbetriebssignal 0 ist und das Sekundärbetriebssignal 1 ist:

$$s1 = e1 + e2 + e3 + e4$$

$$s2 = e1 - e2$$

$$s3 = e4 - e3$$

$$s4 = (e1 + e2) - (e3 + e4)$$

(3) wenn das Primärbetriebssignal 1 ist und das Permutationssignal 0 ist:

$$s1 = e1 + A \cdot e3 - B \cdot e4$$

$$s2 = e2 + B \cdot e3 + A \cdot e4$$

$$s3 = e1 - A \cdot e3 + B \cdot e4$$

$$s4 = -e2 + B \cdot e3 + A \cdot e4$$

(4) wenn das Primärbetriebssignal 1 ist und das Permutationssignal 1 ist:

$$s1 = e1 - A \cdot e3 + B \cdot e4$$

$$s2 = -e2 + B \cdot e3 + A \cdot e4$$

$$s3 = e1 + A \cdot e3 - B \cdot e4$$

$$s4 = e2 + B \cdot e3 + A \cdot e4.$$

**14.** Verfahren zur Berechnung nach Anspruch 10, **dadurch gekennzeichnet, daß** bei dem Transformationsschritt $E_p$ jeder Rechenblock umfaßt:

- $2^p - 1$ innere Gitterschaltkreise und einen Randgitterschaltkreis für die geraden Werte mit Index p sowie für den letzten Transformationsschritt, wenn $\mu$ gerade ist, und
- $2^p - 1$ innere Gitterschaltkreise sonst.

**15.** Verfahren zur Berechnung nach Anspruch 13, **dadurch gekennzeichnet, daß** das Sekundärbetriebssignal den Wert 1 hat, wenn der Randgitterschaltkreis verwendet wird für den letzten Transformationsschritt mit $\mu$ ungerade, und 0 sonst.

**16.** Verfahren zur Berechnung nach Anspruch 15, **dadurch gekennzeichnet, daß** bei vier Eingangsabtastwerten e1, e2, e3 und e4 und bei einem komplexen Koeffizienten $W^s = A + j \cdot B$ der Gitterschaltkreis die Ausgangsabtastwerte s1, s2, s3 und s4 ausgibt wie folgt:

(1) wenn das Primärbetriebs- und Sekundärbetriebssignal 0 ist:

$$s1 = e1 + e2 + e3 + e4$$

$$s2 = e1 - e2$$

$$s3 = e4 - e3$$

$$s4 = (e1 + e2) - (e3 + e4)$$

(2) wenn das Primärbetriebssignal 0 ist und das Sekundärbetriebssignal 1 ist:

$$s1 = e1 + e4$$

$$s2 = e2$$

$$s3 = e3$$

$$s4 = e1 - e4$$

(3) wenn das Primärbetriebssignal 0 ist und das Permutationssignal 1 ist:

$$s1 = (e3 + e4) - (e1 + e2)$$

$$s2 = e1 - e2$$

$$s3 = e4 - e3$$

$$s4 = e1 + e2 + e3 + e4$$

(4) wenn das Primärbetriebssignal 1 ist und das Permutationssignal 0 ist:

$$s1 = e1 + A \cdot e3 - B \cdot e4$$

$$s2 = e2 + B \cdot e3 + A \cdot e4$$

$$s3 = e1 - A \cdot e3 + B \cdot e4$$

$$s4 = -e2 + B \cdot e3 + A \cdot e4$$

(5) wenn das Primärbetriebssignal 1 ist und das Permutationssignal 1 ist:

$$s1 = e1 - A \cdot e3 + B \cdot e4$$

$$s2 = -e2 + B \cdot e3 + A \cdot e4$$

$$s3 = e1 + A \cdot e3 - B \cdot e4$$

$$s4 = e2 + B \cdot e3 + A \cdot e4.$$

**17.** Verfahren zur Berechnung nach Anspruch 10, **dadurch gekennzeichnet, daß** bei dem Transformationsschritt $E_p$ jeder Rechenblock umfaßt:

- $2^p-1$ innere Gitterschaltkreise und einen Randgitterschaltkreis bei geraden Werten des Index p und
- $2^p-1$ innere Gitterschaltkreise sonst.

**18.** Verfahren zur Berechnung nach Anspruch 17, **dadurch gekennzeichnet, daß** das Sekundärbetriebssignal den Wert 1 hat, wenn der Randgitterschaltkreis für den ersten Transformationsschritt mit μ gerade verwendet wird, und 0 sonst.

**19.** Verfahren zur Berechnung nach Anspruch 18, **dadurch gekennzeichnet, daß** für vier Eingangsabtastwerte e1, e2, e3 und e4 und für einen komplexen Koeffizienten $W^s = A + j \cdot B$ der Gitterschaltkreis die Ausgangsabtastwerte s1, s2, s3 und s4 ausgibt wie folgt:

(1) wenn das Primärbetriebssignal 0 ist und das Sekundärbetriebssignal 1 ist:

$$s1 = e1 + e2$$

$$s2 = e1 - e2$$

$$s3 = e4 - e3$$

$$s4 = e3 + e4$$

(2) wenn das Primärbetriebssignal, das Sekundärbetriebssignal und das Permutationssignal 0 sind:

$$s1 = e1 + e2 + e3 + e4$$

$$s2 = e1 - e2$$

$$s3 = e4 - e3$$

$$s4 = (e1 + e2) - (e3 + e4)$$

(3) wenn das Primärbetriebssignal und das Sekundärbetriebssignal 0 sind sowie das Permutationssignal 1 ist:

$$s1 = (e3 + e4) - (e1 + e2)$$

$$s2 = e1 - e2$$

$$s3 = e4 - e3$$

$$s4 = e1 + e2 + e3 + e4$$

(4) wenn das Primärbetriebssignal 1 ist und das Permutationssignal 0 ist:

$$s1 = e1 + A \cdot e3 - B \cdot e4$$

$$s2 = e2 + B \cdot e3 + A \cdot e4$$

$$s3 = e1 - A \cdot e3 + B \cdot e4$$

$$s4 = -e2 + B \cdot e3 + A \cdot e4$$

(5) wenn das Primärbetriebssignal 1 ist und das Permutationssignal 1 ist:

$$s1 = e1 - A \cdot e3 + B \cdot e4$$

$$s2 = -e2 + B \cdot e3 + A \cdot e4$$

$$s3 = e1 + A \cdot e3 - B \cdot e4$$

$$s4 = e2 + B \cdot e3 + A \cdot e4.$$

**20.** Verfahren zur Berechnung nach Anspruch 8, **dadurch gekennzeichnet, daß** die Gitterschaltkreise für die Umsetzung der Transformationsschritte alle vom gleichen Typ sind und umfassen:

- vier Eingänge zum Einlesen von Eingangsabtastwerten und vier Ausgänge zum Ausgeben von Ausgangsabtastwerten,
- drei zusätzliche Primärbetriebs-, Permutations- und Koeffizienteneingänge,

um selektiv auf die Eingangsabtastwerte verschiedene Transformationsoperationen anzuwenden, die jeweils durch die Werte der Primärbetriebs-, Permutationssignale und eines Koeffizienten bestimmt werden, die an diesen entsprechenden zusätzlichen Eingängen zugelassen sind,
und daß im abschließenden Schritt außerdem eine Addition und eine Subtraktion von erstem und letzten Ausgangsabtastwert durchgeführt wird, die beim letzten Transformationsschritt ausgegeben werden.

**21.** Verfahren zur Berechnung nach Anspruch 20, **dadurch gekennzeichnet, daß** bei dem Transformationsschritt $E_p$ jeder Rechenblock einen Randgitterschaltkreis und $2^p-1$ innere Gitterschaltkreise umfaßt.

**22.** Verfahren zur Berechnung nach Anspruch 21, **dadurch gekennzeichnet, daß** für vier Eingangsabtastwerte e1, e2, e3 und e4 und für einen komplexen Koeffizienten $W^s = A + j \cdot B$ der Gitterschaltkreis die Ausgangsabtastwerte s1, s2, s3 und s4 wie folgt ausgibt:

(1) wenn das Primärbetriebssignal 0 ist:

$$s1 = e1 + e2$$

$$s2 = e1 - e2$$

$$s3 = e4 - e3$$

$$s4 = e3 + e4$$

(2) wenn das Primärbetriebssignal 1 ist und das Permutationssignal 0 ist:

$$s1 = e1 + A \cdot e3 - B \cdot e4$$

$$s2 = e2 + B \cdot e3 + A \cdot e4$$

$$s3 = e1 - A \cdot e3 + B \cdot e4$$

$$s4 = -e2 + B \cdot e3 + A \cdot e4$$

(3) wenn das Primärbetriebssignal 1 ist und das Permutationssignal 1 ist:

$$s1 = e1 - A \cdot e3 + B \cdot e4$$

**33**

$$s2 = -e2 + B \cdot e3 + A \cdot e4$$

$$s3 = e1 + A \cdot e3 - B \cdot e4$$

$$s4 = e2 + B \cdot e3 + A \cdot e4.$$

**23.** Verfahren zur Berechnung nach Anspruch 9 oder 20, **dadurch gekennzeichnet, daß** die erste und zweite binäre Adresse für jeden Gitterschaltkreis von $\mu$ Bits erzeugt wird, wobei jede binäre Adresse dem Rang eines Eingangsabtastwertes des Gitterschaltkreises entspricht und die zweite binäre Adresse größer als die erste binäre Adresse ist.

**24.** Verfahren zur Berechnung nach Anspruch 23, **dadurch gekennzeichnet, daß** die erste und zweite binäre Adresse aufeinanderfolgen, wenn es sich um einen inneren Gitterschaltkreis handelt.

**25.** Verfahren zur Berechnung nach Anspruch 23 oder 24, **dadurch gekennzeichnet, daß**, wenn es sich um einen Randgitterschaltkreis handelt, die p + 2 Bits niedrigen Gewichts der ersten Adresse gleich 0 sind und die p + 2 Bits niedrigen Gewichts der zweiten Adresse eine Zahl der Form $2^{p+1}-1$ bilden.

**26.** Verfahren zur Berechnung nach Anspruch 24 oder 25, **dadurch gekennzeichnet, daß** die Adressen von zwei anderen Abtastwerten, die an die Eingänge des Rand- oder inneren Gitterschaltkreises angelegt werden sollen, erzeugt werden durch Invertieren der (p + 2) Bits niedrigen Gewichts der ersten und zweiten erzeugten Adresse.

**27.** Verfahren zur Berechnung nach Anspruch 26, **dadurch gekennzeichnet, daß** die Abtastwerte mit gerader Adresse und die Abtastwerte mit ungerader Adresse in zwei unterschiedlichen Speichern abgelegt werden.

**28.** Verfahren zur Berechnung nach Anspruch 25, **dadurch gekennzeichnet, daß** der Wert des Parameters s des Koeffizienten $W^s$, der einem inneren Gitterschaltkreis zugeordnet ist, bei dem Transformationsschritt $E_p$ codiert ist mit $\mu$ - 2 Bits und entspricht:

- wenn p + 1 = $\mu$ - 2, der Zahl, die durch die p + 1 Bits niedri-gen Gewichts der zweiten binären für den inneren Gitterschaltkreis erzeugten Adresse gebildet wird,
- wenn p + 1 < $\mu$ - 2, der Zahl, die durch die p + 1 Bits niedrigen Gewichts der zweiten binären für den inneren Gitterschaltkreis erzeugten Adresse gebildet wird, gefolgt von $\mu$ - p - 3 Bits mit Wert Null am Ende der Zahl,
- wenn p + 1 > $\mu$ - 2, der Zahl, die durch die p + 1 Bits niedrigen Gewichts der zweiten binären für den inneren Gitterschaltkreis gebildeten Adresse gebildet wird, abzüglich ihrer $\mu$ - p - 1 Bits niedrigen Gewichts.

**29.** Verfahren zur Berechnung nach Anspruch 4, soweit dieser von Anspruch 3 und jener von Anspruch 2 abhängt, **dadurch gekennzeichnet, daß**

bei jedem Transformationsschritt $E_p$ die Gitterschaltkreise aufgeteilt sind in $2^p$ Rechenblöcke,
jeder Rechenblock einen Randgitterschaltkreis und/oder $N/2^{p+2}-1$ innere Gitterschaltkreise,
der Randgitterschaltkreis des Rechenblocks vom Rang $\alpha$ beim Transformationsschritt $E_\beta$ die Eingangsabtast-werte vom Rang $2^{\mu-\beta}\alpha$, $2^{\mu-\beta}\alpha+2^{\mu-\beta-1}-1$, $2^{\mu-\beta}\alpha+2^{\mu-\beta-1}$, $2^{\mu-\beta}\alpha+2^{\mu-\beta}-1$ in Ausgangsabtastwerte des gleichen Ranges umwandelt, und
der innere Gitterschaltkreis vom Rang $\tau$ des Rechenblocks vom Rang $\alpha$ im Transformationsschritt $E_\beta$ die Eingangsabtastwerte vom Rang $2^{\mu-\beta}\alpha+2\tau+1$, $2^{\mu-\beta}\alpha+2\tau+2$, $2^{\mu-\beta}\alpha+2^{\mu-\beta}-2\tau-3$, $2^{\mu-\beta}\alpha+2^{\mu-\beta}-2\tau-2$ in Ausgangsab-tastwerte des gleichen Rangs umwandelt.

**30.** Verfahren zur Berechnung nach Anspruch 29, **dadurch gekennzeichnet, daß** außerdem ein Abschlußschritt vorgesehen ist zum Modifizieren der Reihenfolge der Ausgangsabtastwerte, die beim letzten Transformationsschritt ausgegeben werden, und zu ihrem Gruppieren in mit dem Index n steigender Reihenfolge.

**31.** Verfahren zur Berechnung nach Anspruch 29 oder 30, **dadurch gekennzeichnet, daß** jeder Gitterschaltkreis mit einem Koeffizienten $W^s$ versehen ist, wobei auf dem Koeffizienten die Operation der inneren Berechnung des Gitterschaltkreises beruht, wobei der Koeffizient gleich $e^{-j(2\pi s/N)}$ mit $s \in [0, .... N/4-1]$ für den Fall einer schnellen Fourier-Transformation ist und gleich $e^{j(2\pi s/N)}$ mit $s \in [0, ..., N/4\text{-}1]$ im Fall einer schnellen inversen Fourier-Transformation ist.

32. Verfahren zur Berechnung nach Anspruch 31, **dadurch gekennzeichnet, daß** der innere Gitterschaltkreis vom Rang $\tau$ des Rechenblockes vom Rang $\alpha$ beim Transformationsschritt $E_\beta$ versehen ist mit dem Koeffizienten $W^\delta$ mit $\delta = (\tau + 1) \cdot 2\beta$.

33. Verfahren zur Berechnung nach Anspruch 32, **dadurch gekennzeichnet, daß** die Gitterschaltkreise für das Umsetzen der Transformationsschritte alle vom gleichen Typ sind und umfassen:

   - vier Eingänge zum Einlesen von Eingangsabtastwerten und vier Ausgänge zum Ausgeben von Ausgangsabtastwerten,
   - vier zusätzliche Eingänge für jeweils Primärbetrieb, Sekundärbetrieb, Permutation und Koeffizienten,

   um selektiv auf die Eingangsabtastwerte verschiedene Transformationsoperationen anzuwenden, die jeweils durch die Werte der Primärbetriebs-, Sekundärbetriebs-, Permutationssignale und eines Koeffizienten bestimmt werden, die an diesen entsprechenden zusätzlichen Eingängen zugelassen sind.

34. Verfahren zur Berechnung nach Anspruch 33, **dadurch gekennzeichnet, daß** für jeden Gitterschaltkreis das Primärbetriebssignal den Wert 0 hat, wenn es sich um einen Randgitterschaltkreis handelt, und 1, wenn es sich um einen inneren Gitterschaltkreis handelt, und
das Permutationssignal den Wert 0 hat bei den Rechenblöcken mit geradzahligem Rang einschließlich dem Rang 0, und 1 sonst.

35. Verfahren zur Berechnung nach Anspruch 31 oder 34, **dadurch gekennzeichnet, daß** das Sekundärbetriebssignal den Wert 1 hat, wenn der Gitterschaltkreis verwendet wird für den letzten Transformationsschritt, sei es ein Rand- oder ein innerer Gitterschaltkreis, und 0 sonst.

36. Verfahren zur Berechnung nach Anspruch 35, **dadurch gekennzeichnet, daß** bei vier Eingangsabtastwerten e1, e2, e3 und e4 und bei einem komplexen Koeffizienten $W^s = A + j \cdot B$ der Gitterschaltkreis die Ausgangsabtastwerte s1, s2, s3 und s4 wie folgt ausgibt:

   (1) wenn das Primärbetriebs- und Sekundärbetriebssignal 0 ist:

$$s1 = (e1 + e2)/2$$

$$s2 = (e1 - e2)/2$$

$$s3 = (e4 - e3)/2$$

$$s4 = (e3 + e4)/2$$

   (2) wenn das Primärbetriebssignal 0 ist und das Sekundärbetriebssignal 1 ist:

$$s1 = [(e1 + e4)/2 + e2]/2$$

$$s2 = [(e1 + e4)/2 - e2]/2$$

$$s3 = -[e3 - (e1 - e4)/2]/2$$

$$s4 = [e3 + (e1 - e4)/2]/2$$

(3) wenn das Primärbetriebssignal 1 ist und das Permutationssignal 0 ist:

$$s1 = (e1 + s3)/2$$

$$s2 = (e2 - e4)/2$$

$$s3 = [(e1 - e3) \cdot A - (e2 + e4) \cdot B]/2$$

$$s4 = [-(e1 - e3) \cdot B + (e2 + e4) \cdot A]/2$$

(4) wenn das Primärbetriebssignal 1 ist und das Permutationssignal 1 ist:

$$s1 = [(e1 - e3) \cdot A - (e2 + e4) \cdot B]/2$$

$$s2 = [-(e1 - e3) \cdot B + (e2 + e4) \cdot A]/2$$

$$s3 = (e1 + e3)/2$$

$$s4 = (e2 - e4)/2.$$

37. Verfahren zur Berechnung nach Anspruch 33, **dadurch gekennzeichnet, daß** die erste und zweite binäre Adresse von $\mu$ Bits erzeugt wird für jeden Gitterschaltkreis, wobei jede binäre Adresse dem Rang eines Eingangsabtastwertes des Gitterschaltkreises entspricht und die zweite binäre Adresse größer als die erste binäre Adresse ist.

38. Verfahren zur Berechnung nach Anspruch 37, **dadurch gekennzeichnet, daß** die erste und zweite binäre Adresse aufeinanderfolgen, wenn es sich um einen inneren Gitterschaltkreis handelt.

39. Verfahren zur Berechnung nach Anspruch 37 oder 38, **dadurch gekennzeichnet, daß** wenn es sich um einen Randgitterschaltkreis handelt, die $\mu$ - p Bits niedrigen Gewichts der ersten Adresse gleich 0 sind und die $\mu$ - p Bits niedrigen Gewichts der zweiten Adresse eine Zahl der Form $N/2^{p+1}-1$ bilden.

40. Verfahren zur Berechnung nach Anspruch 38 oder 39, **dadurch gekennzeichnet, daß** die Adressen von zwei anderen Abtastwerten, die an die Eingänge des Gitterschaltkreises angelegt werden sollen, erzeugt werden durch Invertieren der $\mu$ - p Bits niedrigen Gewichts der ersten und zweiten erzeugten Adresse.

41. Verfahren zur Berechnung nach Anspruch 40, **dadurch gekennzeichnet, daß** die Abtastwerte mit gerader Adresse und die Abtastwerte mit ungerader Adresse in zwei unterschiedlichen Speichern abgelegt werden.

42. Verfahren zur Berechnung nach Anspruch 41, **dadurch gekennzeichnet, daß** der Wert des Parameters s des Koeffizienten $W^s$ für einen inneren Gitterschaltkreis bei dem Transformationsschritt $E_p$ codiert ist mit $\mu$ - 2 Bits und entspricht:

- wenn $\mu$ -p - 1 = $\mu$ - 2, der Zahl, die durch die $\mu$ - p - 1 Bits niedrigen Gewichts der zweiten binären für den inneren Gitterschaltkreis erzeugten Adresse gebildet wird,
- wenn $\mu$ - p - 1 < $\mu$ - 2, der Zahl, die durch die $\mu$ - p - 1 Bits niedrigen Gewichts der zweiten binären für den inneren Gitterschaltkreis erzeugten Adresse gebildet wird, gefolgt von p - 1 Bits mit Wert Null am Ende der Zahl,
- wenn $\mu$ - p - 1 > $\mu$ - 2, der Zahl, die durch die $\mu$ - p - 1 Bits niedrigen Gewichts der zweiten binären für den inneren Gitterschaltkreis gebildeten Adresse gebildet wird, abzüglich ihrer p + 1 Bits niedrigen Gewichts.

**Claims**

1. Method of calculating the fast Fourier transform or the inverse fast Fourier transform of a digital signal defined by a series of N real starting samples x(n), with N power of two and n ∈ [0..N-1], comprising successive transformation steps (2) for transforming input samples into output samples, all the transformation steps being performed by means of a single set of butterfly circuits with a plurality of inputs and a plurality of outputs and the operating mode of which is changed selectively at each transformation step, the input and output samples of each transformation step being stored in a storage memory, a series of N output samples y(n) representative of the fast Fourier transform or inverse fast Fourier transform of the starting samples x(n) being delivered in the last transformation step, **characterised in that** the output samples y(n) are real, and **in that** the output samples of a butterfly circuit are substituted in the storage memory for the corresponding input samples of the same rank so that if the starting samples x(n) processed in the first transformation step are arranged in the bit-reversed order of their index n, the output samples y(n) are delivered in the last transformation step in the ascending order of the index n, which output samples are defined by the following relations:

$$y(0) = Re[X(0)]$$

$$y(n) = Re[X((n+1)/2)]$$

with n odd and different from N-1

$$y(n) = Im[X(n/2)]$$

with n even and different from 0

$$y(N-1) = Re[X(N/2)]$$

in which the samples X(n), with n ∈ [0..N-1], designate the complex samples of the series corresponding to the fast Fourier transform or inverse fast Fourier transform of the starting series of samples x(n).

2. Method of calculating the fast Fourier transform or the inverse fast Fourier transform of a digital signal defined by a series of N complex samples X(n) conjugated two by two, **characterised in that** the calculation is performed on a series of N real starting samples y(n) representative of the series of complex samples X(n), with N power of two and n ∈ [0..N-1], the starting samples y(n) being defined as follows:

$$y(0) = Re[X(0)]$$

$$y(n) = Re[X((n+1)/2)]$$

with n odd and different from N-1

$$y(n) = Im[X(n/2)]$$

with n even and different from 0

$$y(N-1) = Re[X(N/2)]$$

**in that** the method comprises successive transformation steps for transforming input samples into output samples, a series of N real output samples x(n) representative of this fast Fourier transform or inverse fast Fourier transform being delivered in the last transformation step, all the transformation steps being performed by means of a single set of butterfly circuits with a plurality of inputs and a plurality of outputs and the operating mode of which is changed selectively at each transformation step, the input and output samples of each transformation step being stored in a storage memory, and **in that** the output samples of a butterfly circuit are substituted in the storage memory for the corresponding input samples of the same rank such that if the starting samples y(n) processed by the first transformation step are arranged in the ascending order of the index n, the output samples x(n) are delivered in the last transformation step in the bit-reversed order of the index n.

3. Method of calculation according to claim 1 or 2, **characterised in that** at each transformation step each butterfly circuit transforms pairs of input samples, the ranks of the input samples of the same pair in the series of input samples of said transformation step being symmetrical in relation to a mid point between the extreme rank values of the input samples transformed by said butterfly circuit.

4. Method of calculation according to claim 3, **characterised in that** it comprises $\mu$-1 transformation steps $E_p$ with $\mu=\log_2 N$ and $p \in [0..\mu\text{-}2]$.

5. Method of calculation according to claim 4, itself dependent on claim 3, itself dependent on claim 1, **characterised in that** it additionally comprises:

   - a preliminary step for modifying the order of the starting samples x(n) arranged in the ascending order of the index n and presenting them in the bit-reversed order of the index n in the first transformation step, and
   - a final step for processing the series of output samples y(n) and delivering a series of N conjugated complex samples X(n) corresponding to the fast Fourier transform or inverse fast Fourier transform of the series of starting samples x(n).

6. Method of calculation according to claim 4, itself dependent on claim 3, itself dependent on claim 1, or according to claim 5, **characterised in that** at each transformation step $E_p$ the butterfly circuits are distributed in $N/2^{p+2}$ calculation blocks,

   **in that** each calculation block comprises one peripheral butterfly circuit and/or $2^p$-1 internal butterfly circuits, **in that** the peripheral butterfly circuit of the calculation block of rank $\alpha$ in transformation step $E_\beta$ transforms the input samples of rank $2^{\beta+2}\alpha$, $2^{\beta+2}\alpha+2^{\beta+1}$-1, $2^{\beta+2}\alpha+2^{\beta+1}$, $2^{\beta+2}\alpha+2^{\beta+2}$-1 into output samples of the same rank, and **in that** the internal butterfly circuit of rank $\tau$ of the calculation block of rank $\alpha$ in transformation step $E_\beta$ transforms the input samples of rank $2^{\beta+2}\alpha+2\tau+1$, $2^{\beta+2}\alpha+2\tau+2$, $2^{\beta+2}\alpha+2^{\beta+2}$-2$\tau$-3, $2^{\beta+2}\alpha+2^{\beta+2}$-2$\tau$-2 into output samples of the same rank, with $\beta\geq1$.

7. Method of calculation according to claim 6, **characterised in that** each butterfly circuit is assigned a coefficient $W^s$ which forms the basis of the calculation operation inside the butterfly circuit, said coefficient being equal to $e^{-j(2\pi s/N)}$ with $s \in [0..N/4\text{-}1]$ in the case of a fast Fourier transform and equal to $e^{j(2\pi s/N)}$ with $s \in [0..N/4\text{-}1]$ in the case of an inverse fast Fourier transform.

8. Method of calculation according to claim 7, **characterised in that** the internal butterfly circuit of rank $\tau$ of the calculation block of rank $\alpha$ in transformation step $E_\beta$ is assigned the coefficient $W^\delta$ with $\delta = (\tau+1). (N/2^{\beta+2})$.

9. Method of calculation according to claim 8, **characterised in that** the butterfly circuits designed to implement the transformation steps are all of the same type and comprise

   - four inputs for receiving input samples and four outputs for delivering output samples,
   - four additional inputs respectively for the primary mode, secondary mode, permutation and coefficient, in order to selectively subject the input samples to different transformation operations each determined by the values assigned to primary mode, secondary mode and permutation signals and to a coefficient received at said corresponding additional inputs.

10. Method of calculation according to claim 9, **characterised in that** for each butterfly circuit the primary mode signal has a value of 0 for a peripheral butterfly circuit and 1 for an internal butterfly circuit, **in that** the permutation signal has a value of 0 for the calculation blocks of even-numbered rank, including the rank 0, and 1 for the others.

**11.** Method of calculation according to claim 10, **characterised in that** in transformation step $E_p$ each calculation block comprises one peripheral butterfly circuit and $2^p-1$ internal butterfly circuits.

**12.** Method of calculation according to claim 11, **characterised in that** the secondary mode signal has a value of 1 if the peripheral butterfly circuit is used for the last transformation step and 0 if not.

**13.** Method of calculation according to claim 12, **characterised in that** for four input samples e1, e2, e3 and e4 and for a complex coefficient $W^s=A+j.B$, the butterfly circuit supplies the following output samples s1, s2, s3 and s4

(1) if the primary mode and secondary mode signals are 0:

$$s1 = e1 + e2$$

$$s2 = e1 - e2$$

$$s3 = e4 - e3$$

$$s3 = e3 + e4$$

(2) if the primary mode signal is 0 and the secondary mode signal is 1:

$$s1 = e1 + e2 + e3 + e4$$

$$s2 = e1 - e2$$

$$s3 = e4 - e3$$

$$s4 = (e1 + e2) - (e3 + e4)$$

(3) if the primary mode signal is 1 and the permutation signal is 0:

$$s1 = e1 + A.e3 - B.e4$$

$$s2 = e2 + B.e3 + A.e4$$

$$s3 = e1 - A.e3 + B.e4$$

$$s4 = -e2 + B.e3 + A.e4$$

(4) if the primary mode signal is 1 and the permutation signal is 1:

$$s1 = e1 - A.e3 + B.e4$$

$$s2 = -e2 + B.e3 + A.e4$$

$$s3 = e1 + A.e3 - B.e4$$

$$s4 = e2 + B.e3 + A.e4$$

**14.** Method of calculation according to claim 10, **characterised in that** in transformation step $E_p$ each calculation block comprises:

- $2^p - 1$ internal butterfly circuits and one peripheral butterfly circuit for the even values of the index p and for the last transformation step if $\mu$ is even, and
- $2^p - 1$ internal butterfly circuits if not.

**15.** Method of calculation according to claim 13, **characterised in that** the secondary mode signal has a value of 1 if the peripheral butterfly circuit is used for the last transformation step with $\mu$ odd and 0 if not.

**16.** Method of calculation according to claim 15, **characterised in that** for four input samples e1, e2, e3 and e4 and for a complex coefficient $W^s = A + j.B$, the butterfly circuit supplies the following output samples s1, s2, s3 and s4

(1) if the primary mode, secondary mode and permutation signals are 0:

$$s1 = e1 + e2 + e3 + e4$$

$$s2 = e1 - e2$$

$$s3 = e4 - e3$$

$$s4 = (e1 + e2) - (e3 + e4)$$

(2) if the primary mode signal is 0 and the secondary mode signal is 1:

$$s1 = e1 + e4$$

$$s2 = e2$$

$$s3 = e3$$

$$s4 = e1 - e4$$

(3) if the primary mode signal is 0 and the permutation signal is 1:

$$s1 = (e3 + e4) - (e1 + e2)$$

$$s2 = e1 - e2$$

$$s3 = e4 - e3$$

$$s4 = e1 + e2 + e3 + e4$$

(4) if the primary mode signal is 1 and the permutation signal is 0:

$$s1 = e1 + A.e3 - B.e4$$

$$s2 = e2 + B.e3 + A.e4$$

$$s3 = e1 - A.e3 + B.e4$$

$$s4 = -e2 + B.e3 + A.e4$$

(5) if the primary mode signal is 1 and the permutation signal is 1:

$$s1 = e1 - A.e3 + B.e4$$

$$s2 = -e2 + B.e3 + A.e4$$

$$s3 = e1 + A.e3 - B.e4$$

$$s4 = e2 + B.e3 + A.e4$$

**17.** Method of calculation according to claim 10, **characterised in that** in transformation step $E_p$ each calculation block comprises:

- $2^p-1$ internal butterfly circuits and one peripheral butterfly circuit for the even values of the index p, and
- $2^p-1$ internal butterfly circuits otherwise.

**18.** Method of calculation according to claim 17, **characterised in that** the secondary mode signal has a value of 1 if the peripheral butterfly circuit is used for the first transformation step with $\mu$ even and 0 if not.

**19.** Method of calculation according to claim 18, **characterised in that** for four input samples e1, e2, e3 and e4 and for a complex coefficient $W^s = A + j.B$, the butterfly circuit supplies the following output samples s1, s2, s3 and s4

(1) if the primary mode signal is 0 and the secondary mode signal is 1:

$$s1 = e1 + e2$$

$$s2 = e1 - e2$$

$$s3 = e4 - e3$$

$$s4 = e3 + e4$$

(2) if the primary mode, secondary mode and permutation signals are 0:

$$s1 = e1 + e2 + e3 + e4$$

$$s2 = e1 - e2$$

$$s3 = e4 - e3$$

$$s4 = (e1 + e2)-(e3 + e4)$$

(3) if the primary mode and secondary mode signals are 0 and the permutation signal is 1:

$$s1 = (e3 + e4) - (e1 + e2)$$

$$s2 = e1 - e2$$

$$s3 = e4 - e3$$

$$s4 = e1 + e2 + e3 + e4$$

(4) if the primary mode signal is 1 and the permutation signal is 0:

$$s1 = e1 + A.e3 -B.e4$$

$$s2 = e2 + B.e3 + A.e4$$

$$s3 = e1 - A.e3 + B.e4$$

$$s4 = -e2 + B.e3 + A.e4$$

(5) if the primary mode signal is 1 and the permutation signal is 1:

$$s1 = e1 - A.e3 + B.e4$$

$$s2 = -e2 + B.e3 + A.e4$$

$$s3 = e1 + A.e3 -B.e4$$

$$s4 = e2 + B.e3 + A.e4$$

20. Method of calculation according to claim 8, **characterised in that** the butterfly circuits designed to implement the transformation steps are all of the same type and comprise

   - four inputs for receiving input samples and four outputs for delivering output samples,
   - three additional inputs respectively for the primary mode, permutation and coefficient,

   in order to selectively subject the input samples to different transformation operations each determined by the values assigned to primary mode and permutation signals and to a coefficient received at said corresponding additional inputs, and **in that** the final step additionally performs an addition and a subtraction between the first and the last output samples delivered in the last transformation step.

21. Method of calculation according to claim 20, **characterised in that** in transformation step $E_p$ each calculation block comprises one peripheral butterfly circuit and $2^p-1$ internal butterfly circuits.

22. Method of calculation according to claim 21, **characterised in that** for four input samples e1, e2, e3 and e4 and for a complex coefficient $W^s=A+j.B$, the butterfly circuit supplies the following output samples s1, s2, s3 and s4

   (1) if the primary mode signal is 0:

$$s1 = e1 + e2$$

$$s2 = e1 - e2$$

$$s3 = e4 - e3$$

$$s4 = e3 + e4$$

   (2) if the primary mode signal is 1 and the permutation signal is 0:

$$s1 = e1 + A.e3 - B.e4$$

$$s2 = e2 + B.e3 + A.e4$$

$$s3 = e1 - A.e3 + B.e4$$

$$s4 = -e2 + B.e3 + A.e4$$

   (3) if the primary mode signal is 1 and the permutation signal is 1:

$$s1 = e1 - A.e3 + B.e4$$

$$s2 = -e2 + B.e3 + A.e4$$

$$s3 = e1 + A.e3 - B.e4$$

$$s4 = e2 + B.e3 + A.e4$$

**23.** Method of calculation according to claim 9 or 20, **characterised in that** first and second binary addresses of $\mu$ bits are generated for each butterfly circuit, each binary address corresponding to the rank of an input sample of said butterfly circuit and the second binary address being higher than the first binary address.

**24.** Method of calculation according to claim 23, **characterised in that** said first and second binary addresses are consecutive for an internal butterfly circuit.

**25.** Method of calculation according to claim 23 or 24, **characterised in that** for a peripheral butterfly circuit the p+2 low-order bits of the first address are equal to 0 and the p+2 low-order bits of the second address form a number equal to $2^{p+1}$-1.

**26.** Method of calculation according to claim 24 or 25, **characterised in that** the addresses of the other two samples to be applied to the inputs of the butterfly circuit, whether peripheral or internal, are obtained by inverting the (p+2) low-order bits of said first and second addresses produced.

**27.** Method of calculation according to claim 26, **characterised in that** the even-numbered address samples and the odd-numbered address samples are stored in two separate memories.

**28.** Method of calculation according to claim 25, **characterised in that** the value of the parameter s of the coefficient $W^s$ assigned to an internal butterfly circuit in transformation step $E_p$ is coded with $\mu$-2 bits, and corresponds:

- to the number formed by the p+1 low-order bits of the second binary address produced for said internal butterfly circuit if p+1=$\mu$-2,
- to the number formed by the p+1 low-order bits of the second binary address produced for said internal butterfly circuit, followed by $\mu$-p-3 zero bits at the end of the number, if p+1<$\mu$-2,
- to the number formed by the p+1 low-order bits of the second binary address produced for said internal butterfly circuit, minus its $\mu$-p-1 low-order bits, if p+1>$\mu$-2.

**29.** Method of calculation according to claim 4, itself dependent on claim 3, itself dependent on claim 2, **characterised in that** in each transformation step $E_p$ the butterfly circuits are distributed in $2^p$ calculation blocks,

**in that** each calculation block comprises one peripheral butterfly circuit and $N/2^{p+2}$-1 internal butterfly circuits, **in that** the peripheral butterfly circuit of the calculation block of rank $\alpha$ in transformation step $E_\beta$ transforms the input samples of rank $2^{\mu-\beta}\alpha$, $2^{\mu-\beta}\alpha+2^{\mu-\beta-1}$-1, $2^{\mu-\beta}\alpha+2^{\mu-\beta-1}$, $2^{\mu-\beta}\alpha+2^{\mu-\beta}$-1 into output samples of the same rank, and **in that** the internal butterfly circuit of rank $\tau$ of the calculation block of rank $\alpha$ in transformation step $E_\beta$ transforms the input samples of rank $2^{\mu-\beta}\alpha+2\tau+1$, $2^{\mu-\beta}\alpha+2\tau+2$, $2^{\mu-\beta}\alpha+2^{\mu-\beta}$-2$\tau$-3, $2^{\mu-\beta}\alpha+2^{\mu-\beta}$-2$\tau$-2 into output samples of the same rank.

**30.** Method of calculation according to claim 29, **characterised in that** it additionally comprises a final step for modifying the order of the output samples delivered in the last transformation step and arranging them in the ascending order of the index n.

**31.** Method of calculation according to claim 29 or 30, **characterised in that** each butterfly circuit is assigned a coefficient $W^s$ which forms the basis for the calculation operation inside the butterfly circuit, said coefficient being equal to $e^{-j(2\pi s/N)}$ with $s \in [0..N/4$-1] in the case of a fast Fourier transform and equal to $e^{j(2\pi s/N)}$ with $s \in [0..N/4$-1] in the case of an inverse fast Fourier transform.

**32.** Method of calculation according to claim 31, **characterised in that** the internal butterfly circuit of rank $\tau$ of the calculation block of rank $\alpha$ in transformation step $E_\beta$ is associated with the coefficient $W^\delta$ with $\delta = (\tau+1).2^\beta$.

**33.** Method of calculation according to claim 32, **characterised in that** the butterfly circuits for implementing the transformation steps are all of the same type and comprise

- four inputs for receiving input samples and four outputs for delivering output samples,
- four additional inputs respectively for the primary mode, secondary mode, permutation and coefficient, in order to selectively subject the input samples to different transformation operations each determined by the values assigned to primary mode, secondary mode and permutation signals and to a coefficient received at said corresponding additional inputs.

**34.** Method of calculation according to claim 33, **characterised in that** for each butterfly circuit the primary mode signal has a value of 0 for a peripheral butterfly circuit and 1 for an internal butterfly circuit, and **in that** the permutation signal has a value of 0 for the calculation blocks of even-numbered rank, including the rank 0, and 1 for the odd values.

**35.** Method of calculation according to claim 31 or 34, **characterised in that** the secondary mode signal has a value of 1 if the butterfly circuit, whether peripheral or internal, is used for the first transformation step and 0 if not.

**36.** Method of calculation according to claim 35, **characterised in that** for four input samples e1, e2, e3 and e4 and for a complex coefficient $W^s=A+j.B$, the butterfly circuit supplies the following output samples s1, s2, s3 and s4

(1) if the primary mode and secondary mode signals are 0:

$$s1 = (e1 + e2)/2$$

$$s2 = (e1 - e2)/2$$

$$s3 = (e4 - e3)/2$$

$$s4 = (e3 + e4)/2$$

(2) if the primary mode signal is 0 and the secondary mode signal is 1:

$$s1 = [(e1+e4)/2+e2]/2$$

$$s2 = [(e1+e4)/2-e2]/2$$

$$s3 = -[e3-(e1-e4)/2]/2$$

$$s4 = [e3+(e1-e4)/2]/2$$

(3) if the primary mode signal is 1 and the permutation signal is 0:

$$s1 = (e1+e3)/2$$

$$s2 = (e2-e4)/2$$

$$s3 = [(e1-e3).A - (e2+e4).B]/2$$

$$s4 = [-(e1-e3).B + (e2+e4).A]/2$$

(4) if the primary mode signal is 1 and the permutation signal is 1:

$$s1 = [(e1-e3).A - (e2+e4).B]/2$$

$$s2 = [-(e1-e3).B + (e2+e4).A]/2$$

$$s3 = (e1+e3)/2$$

$$s4 = (e2-e4)/2$$

**37.** Method of calculation according to claim 33, **characterised in that** first and second binary addresses of $\mu$ bits are generated for each butterfly circuit, each binary address corresponding to the rank of an input sample of said butterfly circuit and the second binary address being higher than the first binary address.

**38.** Method of calculation according to claim 37, **characterised in that** said first and second binary addresses are consecutive for an internal butterfly circuit.

**39.** Method of calculation according to claim 37 or 38, **characterised in that** for a peripheral butterfly circuit the $\mu$-p low-order bits of the first address are equal to 0 and the $\mu$-p low-order bits of the second address form a number equal to $N/2^{p+1}$-1.

**40.** Method of calculation according to claim 38 or 39, **characterised in that** the addresses of the other two samples to be applied to the inputs of the butterfly circuit are obtained by inverting the $\mu$-p low-order bits of the two addresses produced.

**41.** Method of calculation according to claim 40, **characterised in that** the even-numbered address samples and the odd-numbered address samples are stored in two separate memories.

**42.** Method of calculation according to claim 41, **characterised in that** the value of the parameter s of the coefficient $W^s$ assigned to an internal butterfly circuit in transformation step $E_p$ is coded with $\mu$-2 bits, and corresponds:

- to the number formed by the $\mu$-p-1 low-order bits of the second address produced for said internal butterfly circuit, if $\mu$-p-1=$\mu$-2,
- to the number formed by the $\mu$-p-1 low-order bits of the second address produced for said internal butterfly circuit, followed by p-1 zero bits at the end of the number, if $\mu$-p-1<$\mu$-2,
- to the number formed by the $\mu$-p-1 low-order bits of the second address produced for said internal butterfly circuit, minus its p+1 low-order bits, if $\mu$-p-1>$\mu$-2.

FIG.1A

FIG.1B

FIG.3

FIG.2

FIG. 4

FIG. 5

[x(0),x(1),x(2),x(3),x(4),x(5),x(6),x(7),
x(8),x(9),x(10),x(11),x(12),x(13),x(14),x(15)]

| ETAPE PRELIMINAIRE | ～ 1

[x(0),x(8),x(4),x(12),x(2),x(10),x(6),x(14),
x(1),x(9),x(5),x(13),x(3),x(11),x(7),x(15)]

| ETAPES DE TRANSFORMATION | ～ 2

[y(0),y(1),y(2),y(3),y(4),y(5),y(6),y(7),
y(8),y(9),y(10),y(11),y(12),y(13),y(14),y(15)]

| ETAPE FINALE | ～ 3

[X(0),X(1),X(2),X(3),X(4),X(5),X(6),X(7),
X(8),X(9),X(10),X(11),X(12),X(13),X(14),X(15)]

# FIG. 6

FIG.7A

$x(2)+x(10)=A_R(4)$

$x(6)+x(14)=A_R(6)$

1/0

$A_R(4)+A_R(6)=B_R(4)$

$A_R(4)-A_R(6)=B_R(6)$

$-[A_R(4)-A_R(6)]=-B_R(6)$

$A_R(4)+A_R(6)=B_R(4)$

FIG.7B

$B_R(9)$

$-B_I(9)$

$B_R(13)$

$-B_I(13)$

3/-3

$B_R(9)+3.B_R(13)+3.B_I(13)=C_R(9)$

$B_I(9)-3.B_R(13)+3.B_I(13)=C_I(9)$

$B_R(9)-3.B_R(13)-3.B_I(13)=C_R(11)$

$-B_I(9)-3.B_R(13)+3.B_I(13)=C_I(11)$

$B_R(9)-3.B_R(13)-3.B_I(13)=C_R(11)$

$-B_I(9)-3.B_R(13)+3.B_I(13)=C_I(11)$

$B_R(9)+3.B_R(13)+3.B_I(13)=C_R(9)$

$B_I(9)-3.B_R(13)+3.B_I(13)=C_I(9)$

FIG.9

$x(0)$

$x(8)$

1/0

$x(0)+x(8)=A_R(0)$

$x(0)-x(8)=A_R(1)$

$x(4)$

$x(12)$

1/0

$-[x(4)-x(12)]=-A_R(3)$

$x(4)+x(12)=A_R(2)$

$x(0)$

$x(8)$

$x(4)$

$x(12)$

1/0

$x(0)+x(8)=A_R(0)$

$x(0)-x(8)=A_R(1)$

$-[x(4)-x(12)]=-A_R(3)$

$x(4)+x(12)=A_R(2)$

FIG.8

FIG.10

**FIG.11**

Inputs: e1, e2, e3, e4

circuit croisillon

COEF — A/B
MP — {0,1}
PERM — {0,1}

| | | MP=0 | MP=1 PERM=0 | MP=1 PERM=1 |
|---|---|---|---|---|
| s1 | = | e1+e2 | e1+A.e3-B.e4 | e1-A.e3+B.e4 |
| s2 | = | e1-e2 | e2+B.e3+A.e4 | -e2+B.e3+A.e4 |
| s3 | = | -(e3-e4) | e1-A.e3+B.e4 | e1+A.e3-B.e4 |
| s4 | = | e3+e4 | -e2+B.e3+A.e4 | e2+B.e3+A.e4 |

**FIG.13**

{0,1}

Inputs: e1, e2, e3, e4

circuit croisillon

MS

COEF — A/B
MP — {0,1}
PERM — {0,1}

| | | MS=0 MP=0 | MS=1 MP=0 | MP=1 PERM=0 | MP=1 PERM=1 |
|---|---|---|---|---|---|
| s1 | = | e1+e2 | (e1+e2)+(e3+e4) | e1+A.e3-B.e4 | e1-A.e3+B.e4 |
| s2 | = | e1-e2 | e1-e2 | e2+B.e3+A.e4 | -e2+B.e3+A.e4 |
| s3 | = | -(e3-e4) | -(e3-e4) | e1-A.e3+B.e4 | e1+A.e3-B.e4 |
| s4 | = | e3+e4 | (e1+e2)-(e3+e4) | -e2+B.e3+A.e4 | e2+B.e3+A.e4 |

55

FIG.12

FIG.14

EP 1 038 236 B1

**E0**

x(0), x(8), x(4), x(12)

$[x(0)+x(8)]+[x(4)+x(12)]=B_R(0)$

$x(0)-x(8)=A_R(1)=B_R(1)$

$-[x(4)-x(12)]=-A_R(3)=B_I(1)$

$[x(0)+x(8)]-[x(4)+x(12)]=B_R(2)$

x(2), x(10), x(6), x(14)

$-[(x(2)+x(10))-(x(6)+x(14))]=-B_R(6)$

$x(2)-x(10)=A_R(5)=B_R(5)$

$-[x(6)-x(14)]=-A_R(7)=B_I(5)$

$[x(2)+x(10)]+[x(6)+x(14)]=B_R(4)$

x(1), x(9), x(5), x(13)

$[x(1)+x(9)]+[x(5)+x(13)]=B_R(8)$

$x(1)-x(9)=A_R(9)=B_R(9)$

$-[x(5)-x(13)]=-A_R(11)=B_I(9)$

$[x(1)+x(9)]-[x(5)+x(13)]=B_R(10)$

x(3), x(11), x(7), x(15)

$-[(x(3)+x(11))-(x(7)+x(15))]=-B_R(14)$

$x(3)-x(11)=A_R(13)=B_R(13)$

$-[x(7)-x(15)]=-A_R(15)=B_I(13)$

$[x(3)+x(11)]+[x(7)+x(15)]=B_R(12)$

**E1**

$B_R(0)$

$B_R(1)+3.B_R(5)+3.B_I(5)=C_R(1)$

$B_I(1)-3.B_R(5)+3.B_I(5)=C_I(1)$

$B_R(2)=C_R(2)$

$-B_R(6)=C_I(2)$

$B_R(1)-3.B_R(5)-3.B_I(5)=C_R(3)$

$-B_I(1)-3.B_R(5)+3.B_I(5)=C_I(3)$

$B_R(4)$

$B_R(8)$

$B_R(9)-3 B_R(13)-3.B_I(13)=C_R(11)$

$-B_I(9)-3.B_R(13)+3.B_I(13)=C_I(11)$

$B_R(10)=C_R(10)$

$-B_R(14)=C_I(10)$

$B_R(9)+3.B_R(13)+3.B_I(13)=C_R(9)$

$B_I(9)-3.B_R(13)+3.B_I(13)=C_I(9)$

$B_R(12)$

**E2** (1/0, 2/-4, 3/-3, 4/-2)

$[B_R(0)+B_R(4)]+[B_R(8)+B_R(12)]=X_R(0)=y(0)$

$C_R(1)+2.C_R(9)+4.C_I(9)=X_R(1)=y(1)$

$C_I(1)-4.C_R(9)+2.C_I(9)=X_I(1)=y(2)$

$C_R(2)+3.C_R(10)+3.C_I(10)=X_R(2)=y(3)$

$C_I(2)-3.C_R(10)+3.C_I(10)=X_I(2)=y(4)$

$C_R(3)+4.C_R(11)+2.C_I(11)=X_R(3)=y(5)$

$C_I(3)-2.C_R(11)+4.C_I(11)=X_I(3)=y(6)$

$B_R(0)-B_R(4)=C_R(4)=X_R(4)=y(7)$

$-[B_R(8)-B_R(12)]=-C_R(12)=X_I(4)=y(8)$

$C_R(3)-4.C_R(11)-2.C_I(11)=X_R(5)=y(9)$

$-C_I(3)-2.C_R(11)+4.C_I(11)=X_I(5)=y(10)$

$C_R(2)-3.C_R(10)-3.C_I(10)=X_R(6)=y(11)$

$-C_I(2)-3.C_R(10)+3.C_I(10)=X_I(6)=y(12)$

$C_R(1)-2.C_R(9)-4.C_I(9)=X_R(7)=y(13)$

$-C_I(1)-4.C_R(9)+2.C_I(9)=X_I(7)=y(14)$

$[B_R(0)+B_R(4)]-[B_R(8)+B_R(12)]=C_R(8)=y(15)$

FIG.15

FIG.16

FIG.17

**FIG.18**

Inputs: x(0), x(4), x(2), x(6), x(1), x(5), x(3), x(7)

$1/0$

E0 stage:

$x(0)+x(4)=A_R(0)$

$x(0)-x(4)=A_R(1)=B_R(1)$

$-[x(2)-x(6)]=-A_R(3)=B_I(1)$

$x(2)+x(6)=A_R(2)$

$x(1)+x(5)=A_R(4)$

$x(1)-x(5)=A_R(5)=B_R(5)$

$-[x(3)-x(7)]=-A_R(7)=B_I(5)$

$x(3)+x(7)=A_R(6)$

$1/0$ $\overline{E0}$

E1 stage: $1/0$ $2/-2$

$[A_R(0)+A_R(2)]+[A_R(4)+A_R(6)]=X_R(0)=y(0)$

$B_R(1)+2.B_R(5)+2.B_I(5)=X_R(1)=y(1)$

$B_I(1)-2.B_R(5)+2.B_I(5)=X_I(1)=y(2)$

$A_R(0)-A_R(2)=X_R(2)=y(3)$

$-[A_R(4)-A_R(6)]=X_I(2)=y(4)$

$B_R(1)-2.B_R(5)-2.B_I(5)=X_R(3)=y(5)$

$-B_I(1)-2.B_R(5)+2.B_I(5)=X_I(3)=y(6)$

$[A_R(0)+A_R(2)]-[A_R(4)+A_R(6)]=X_R(4)=y(7)$

$\overline{E1}$

**FIG.18**

---

**FIG.19**

Inputs: e1, e2, e3, e4 — circuit croisillon — Outputs: s1, s2, s3, s4

COEF: A/B, MP: {0,1}, PERM: {0,1}, MS: {0,1}

| | MP=0 MS=1 | PERM=0 MS=0 MP=0 | PERM=1 MS=0 MP=0 | MP=1 PERM=0 | MP=1 PERM=1 |
|---|---|---|---|---|---|
| s1 = | e1+e2 | (e1+e2)+(e3+e4) | -[(e1+e2)-(e3+e4)] | e1+A.e3-B.e4 | e1-A.e3+B.e4 |
| s2 = | e1-e2 | e1-e2 | e1-e2 | e2+B.e3+A.e4 | -e2+B.e3+A.e4 |
| s3 = | -(e3-e4) | -(e3-e4) | -(e3-e4) | e1-A.e3+B.e4 | e1+A.e3-B.e4 |
| s4 = | e3+e4 | (e1+e2)-(e3+e4) | (e1+e2)+(e3+e4) | -e2+B.e3+A.e4 | e2+B.e3+A.e4 |

**FIG.19**

FIG.20

$N = 32 \rightarrow \mathcal{N} = 5$

$P = 1$ (2$^{\grave{e}}$ étape de transformation)

FIG.21

FIG.22

FIG.23

FIG.24